# EUROPEAN PATENT APPLICATION

(11) **EP 4 746 512 A1**
(43) Date of publication of application: **20.05.2026**
(21) Application number: 23944715.4
(22) Date of filing: 12.07.2023
(51) Int. Cl.: H04W 28/08

(54) **UE REGISTRATION METHOD, AND DEVICE, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); MAO, Yuxin, Beijing 100085 (CN)
(74) Representative: Stöckeler, Ferdinand
(86) International application number: PCT/CN2023/107099
(87) International publication number: WO 2025/010695

(57) **Abstract**

Provided in the embodiments of the present disclosure are a user equipment (UE) registration method, and a device, a communication device, a communication system and a storage medium. The method comprises: a first core network function receiving a first request message, which is sent by means of a second core network function, wherein the first request message is used for registration of a UE, which requests registration, to a network slice or deregistration of the UE from the network slice; and according to a group identifier associated with the UE, executing an operation related to the registration of the UE to the network slice or deregistration thereof from the network slice.

## Description

### TECHNICAL FIELD

The disclosure relates to the field of communication technologies, and in particular to a method and a device for user equipment (UE) registration, a communication device, a communication system, and a storage medium.

### BACKGROUND

In 5G communication services, a large number of mobile media services, extended reality (XR) such as cloud Augmented Reality (AR)/virtual reality (VR), cloud gaming, and video-based remote control of machines or drones have emerged. In addition to audio and video streams, the XR service is also related to multimodal data streams, such as data streams for bio-tactile perception. The multimodal data refers to data input from the same or different devices (including sensors) for the same business or application, and the data may be output to one or more destination device terminals. The respective data streams in the multimodal data often have a certain or even strong correlation, such as synchronization of audio and video streams, or synchronization of tactile and visual senses. In many scenarios, the various data streams of the service may be distributed across multiple user equipments (UEs), which are related to the XR multimodal service.

### SUMMARY

With development of communication technologies, it is necessary to take into account a registration association of multiple UEs associated with the same group identifier.

According to a first aspect of embodiments of the present disclosure, a method for user equipment (UE) registration is provided. The method includes:

receiving, by a first core network function, a first request message sent by a second core network function, where the first request message includes a group identifier, and a group corresponding to the group identifier includes at least one UE; and
performing an operation related to the registration of the UE to the network slice or the deregistration of the UE from the network slice according to the group identifier.

According to a second aspect of embodiments of the present disclosure, a method for UE registration is provided. The method includes:
sending, by a second core network function, a first request message to a first core network function, where the first request message includes a group identifier, and the group identifier indicates a group, the group are related to at least one UE, and the first request message is related to a registration of a UE to a network slice or a deregistration of the UE from the network slice.

According to a third aspect of embodiments of the present disclosure, a method for UE registration is provided. The method includes:
sending, by a UE, a second request message to a second core network function;
where the second request message is used to trigger the second core network function to send a first request message including a group identifier to a first core network function, the group identifier indicates a group, the group is related to at least one UE, and the first request message is related to registration of the UE requesting registration to a network slice.

According to a fourth aspect of embodiments of the present disclosure, a method for UE registration is provided. The method includes:
sending, by a UE, a second request message to a second core network function, wherein the second request message is used to trigger the second core network function to send a first request message including a group identifier to a first core network function, the group identifier indicates a group, the group is related to at least one UE, and the first request message is related to registration of the UE requesting registration to a network slice;
sending, by the second core network function, the first request message to the first core network function; and
receiving, by the first core network function, the first request message sent by the second core network function, and performing an operation related to the registration of the UE to the network slice or the deregistration of the UE from the network slice according to the group identifier in the first request message.

According to a fifth aspect of embodiments of the present disclosure, a first core network device is provided. The device includes:
a transceiver module, configured to receive, by the first core network function, a first request message sent by a second core network function, where the first request message is used to register a UE requesting registration with a network slice or to deregister the UE; and to perform an operation related to the registration of the UE to the network slice or the deregistration of the UE from the network slice according to a group identifier associated with the UE.

According to a sixth aspect of embodiments of the present disclosure, a second core network device is provided. The device includes:
a transceiver module, configured to send, by the second core network function, a first request message to a first core network function, where the first request message includes a group identifier; wherein the group identifier is used to indicate a group, the group is related to at least one UE, and the first request message is related to a registration of a UE to a network slice or a deregistration of the UE from the network slice.

According to a seventh aspect of embodiments of the present disclosure, a UE is provided. The UE includes:
a transceiver module, configured to send by the UE, a second request message to a second core network function, where the second request message is used to trigger the second core network function to send a first request message including a group identifier to a first core network function, the group identifier indicates a group, the group is related to at least one UE, and the first request message is related to registration of the UE requesting registration to a network slice.

According to an eighth aspect of embodiments of the present disclosure, a communication system is provided. The communication system includes a core network device and a first device. The core network device is configured to implement the method of the first aspect, and the first device is configured to implement the method of the second aspect.

According to a ninth aspect of embodiments of the present disclosure, a communication device is provided. The communication device includes at least one processor. The processor is configured to invoke instructions to cause the communication device to perform the methods for registration described in the first, second, and third aspects.

According to a tenth aspect of embodiments of the present disclosure, a storage medium is provided. The storage medium stores instructions that, when executed on a communication device, cause the communication device to perform the methods for registration provided in the first, second, and third aspects.

According to the technical solution provided in the present disclosure, the operation related to the registration of the UEs to the network slice or the deregistration of the UEs from the network slice is performed through the group identifier, improving the correlation for registering the UEs associated with the same group identifier to the network slice, and increasing the flexibility of the UE registration.

It should be understood that the above general description and the following detailed description are exemplary and explanatory only, and are not intended to limit the embodiments of the present disclosure.

### BRIEF DESCRIPTION OF THE DRAWINGS

The accompanying drawings, which are incorporated in and form part of the specification, illustrate embodiments of the present disclosure and, together with the description, serve to explain the principles of the embodiments of the present disclosure.
Fig. 1A is a schematic diagram of an architecture of a communication system according to an example embodiment.
Fig. 1B is a schematic diagram of an architecture of a core network device according to an example embodiment.
Fig. 1C is a schematic diagram of an architecture of a core network device according to an example embodiment.
Fig. 2Ais a schematic diagram illustrating a communication method according to an example embodiment.
Fig. 2B is an interactive schematic diagram illustrating a method for user equipment (UE) registration according to an example embodiment.
Fig. 3A is an interactive schematic diagram illustrating a method for UE registration according to an example embodiment.
Fig. 3B is an interactive schematic diagram illustrating a method for UE registration according to an example embodiment.
Fig. 4 is an interactive schematic diagram of a method for UE registration according to an example embodiment.
Fig. 5 is an interactive schematic diagram of a method for UE registration according to an example embodiment.
Fig. 6 is an interactive schematic diagram of a method for UE registration according to an example embodiment.
Fig. 7A is an interactive schematic diagram illustrating a method for UE registration according to an example embodiment.
Fig. 7B is an interactive schematic diagram illustrating a method for UE registration according to an example embodiment.
Fig. 7C is an interactive schematic diagram illustrating a method for UE registration according to an example embodiment.
Fig. 8 is a structural schematic diagram of a first core network device according to an example embodiment.
Fig. 9 is a structural schematic diagram of a second core network device according to an example embodiment.
Fig. 10 is a structural schematic diagram of a UE according to an example embodiment.
Fig. 11A is a structural schematic diagram of a communication device according to an example embodiment.
Fig. 11B is a structural schematic diagram of a communication device according to an example embodiment.

### DETAILED DESCRIPTION

The present disclosure provides a method and a device for user equipment (UE) registration, a communication device, a communication system, and a storage medium.

In a first aspect, embodiments of the present disclosure provide a method for UE registration. The method includes:
receiving, by a first core network function, a first request message sent by a second core network function, where the first request message is used to register a UE requesting registration with a network slice or to deregister the UE; and
performing an operation related to the registration of the UE to the network slice or the deregistration of the UE from the network slice according to a group identifier associated with the UE.

In the above embodiments, through the group identifier in the first request message, the operation related to the registration of the UE to the network slice or the deregistration of the UE from the network slice is performed, thereby improving the correlation for registering the UEs associated with the same group identifier to the network slice.

In conjunction with some embodiments of the first aspect, in some embodiments, the first request message includes the group identifier, and a group corresponding to the group identifier includes at least one UE.

In conjunction with some embodiments of the first aspect, in some embodiments, the method further includes:
determining the group identifier according to a first configuration and/or first information.

In conjunction with some embodiments of the first aspect, in some embodiments, the first configuration includes at least one of:
a local configuration, or an operation management system (OAM) configuration; and/or
the first information is provided by a policy control function (PCF) or a network openness function (NEF).

In the above embodiments, without carrying the group identifier in the first request message, the group identifier can be determined via the first configuration. The group identifier can be determined in different ways, which increases the flexibility of determining the group identifier. The group identifier can also be determined when there is no group identifier in the first request message.

In conjunction with some embodiments of the first aspect, in some embodiments, performing the operation related to the registration of the UE to the network slice or the deregistration of the UE from the network slice according to the group identifier includes:
determining a target policy according to the group identifier; and
accepting or rejecting registering the UE requesting registration with the network slice according to the target policy.

In the above embodiments, the registration of the UEs corresponding to the same group identifier is performed by combining the group identifier and the target policy, which improves the correlation and flexibility of the UE registration.

In some embodiments, accepting or rejecting registering the UE requesting registration with the network slice according to the target policy includes:
in response the target policy being a first policy, rejecting or accepting registering any of the at least one UE in the group corresponding to the group identifier with the network slice; or
in response to the target policy being a second policy, rejecting or accepting registering the at least one UE in the group corresponding to the group identifier with the network slice according to a priority associated with the at least one UE.

In the above embodiments, the flexibility of the UE registration associated with the same group identifier is improved by using the first policy and the second policy.

In conjunction with some embodiments of the first aspect, in some embodiments, the priority includes:
a group priority of the at least one UE; and/or
a UE priority.

In the above embodiments, the first core network function accepts or rejects registering the UE requesting registration with the network slice based on the group priority of the at least one UE corresponding to the group identifier and/or UE priorities of multiple UEs associated with the group identifier, so as to ensure that the UE associated with the group with higher priority is registered with the network slice, or to prioritize the registration of a UE with higher priority in the group to the network slice.

In conjunction with some embodiments of the first aspect, in some embodiments, accepting or rejecting registering the UE requesting registration with the network slice according to the target policy includes:
accepting or rejecting registering the UE requesting registration with the network slice according to the target policy and a numerical count of groups associated with UEs registered with the network slice; and/or
accepting or rejecting registering the UE requesting registration with the network slice according to the target policy and a numerical count of UEs registered with the network slice.

In the above embodiments, the first core network function combines the target policy corresponding to the group identifier and the group identifier to accept or reject registering the UE requesting registration with the network slice, thereby improving the registration correlation and flexibility of registering the UEs related to the same group identifier with the network slice.

In some embodiments, the first request message includes:
an update flag, where the update flag is used to request adding or removing a UE registered with the network slice.

In the above embodiments, the first core network function can determine, based on the update flag carried in the first request message, the UE registered with the network slice that is requested by the first request message to be added or removed, thereby accepting or rejecting registering the UE requesting registration with the network slice.

In conjunction with some embodiments of the first aspect, in some embodiments, accepting or rejecting registering the UE requesting registration with the network slice according to the target policy and the numerical count of groups associated with the UEs registered with the network slice, includes:
in response to the update flag requesting adding a UE registered with the network slice, determining to accept or reject registering the UE requesting registration with the network slice, according to the numerical count of groups associated with the UEs registered with the network slice, a numerical count of groups allowed by the network slice, and the target policy; and/or
accepting or rejecting registering the UE requesting registration with the network slice according to the target policy and the numerical count of UEs registered with the network slice includes:
in response to the update flag requesting adding a UE registered with the network slice, determining to accept or reject registering the UE requesting registration with the network slice, according to the numerical count of UEs registered with the network slice, a numerical count of UEs allowed to be registered with the network slice, and the target policy.

In the above embodiments, two implementations are provided for accepting or rejecting registering the UE requesting registration with the network slice. The acceptance or rejection of registering the UE requesting registration with the network slice can be based on the numerical count of groups or the numerical count of UEs.

In conjunction with some embodiments of the first aspect, in some embodiments, in response to the update flag requesting adding a UE registered with the network slice, determining to accept or reject registering the UE requesting registration with the network slice according to the numerical count of UEs registered with the network slice, the numerical count of UEs allowed to be registered with the network slice, and the target policy, includes at least one of:
in response to the numerical count of UEs registered with the network slice being equal to or greater than the numerical count of UEs allowed to be registered with the network slice, and the target policy being the first policy, determining to reject registering the UE requesting registration with the network slice;
in response to the numerical count of UEs registered with the network slice being less than the numerical count of UEs allowed to be registered with the network slice, and the target policy being the first policy, determining to accept registering the UE requesting registration with the network slice;
in response to the numerical count of UEs registered with the network slice being equal to or greater than the numerical count of UEs allowed to be registered with the network slice, and the target policy being the second policy, determining to reject registering the UE requesting registration with the network slice;
in response to the numerical count of UEs registered with the network slice being less than the numerical count of UEs allowed to be registered with the network slice, the target policy being the second policy, and a numerical count of UEs to be registered being less than or equal to a numerical count of UEs acceptable to be registered with the network slice, determining to accept registering the UE requesting registration with the network slice; or
in response to the numerical count of UEs registered with the network slice being less than the numerical count of UEs allowed to be registered with the network slice, the target policy being the second policy, and a numerical count of UEs to be registered being greater than a numerical count of UEs acceptable to be registered with the network slice, determining to accept registering a part of the at least one UE requesting registration with the network slice and to reject registering another part of the at least one UE requesting registration with the network slice, according to the group priority of the at least one UE in a group associated with the at least one UE to be registered and/or the priority of the at least one UE,
in which the numerical count of UEs acceptable to be registered with the network slice is a difference between the numerical count of UEs allowed to be registered with the network slice and the numerical count of UEs registered with the network slice.

In the above embodiments, an implementation is provided for accepting or rejecting registering the UE requesting registration with the network slice based on the numerical count of UEs, thereby improving the flexibility of UE registration.

In conjunction with some embodiments of the first aspect, in some embodiments, the method further includes:
in response to accepting registering the UE requesting registration with the network slice and the group identifier being not added into a first list, adding the group identifier into the first list, where the first list includes group identifiers associated with the UEs registered with the network slice.

In the above embodiments, when the first core network function determines to accept registering the UE related to the first request message with the network slice, it determines whether to add the group identifier related to the network slice based on whether the group identifier contained in the first request message is a group identifier that has been added into the first list.

In conjunction with some embodiments of the first aspect, in some embodiments, in response to the update flag requesting adding a UE registered with the network slice, determining to accept or reject registering the UE requesting registration with the network slice, according to the numerical count of groups associated with the UEs registered with the network slice, a numerical count of groups allowed by the network slice, and the target policy, includes:
in response to the update flag requesting adding a UE associated with the network slice, determining to accept or reject registering the UE requesting registration with the network slice, according to the numerical count of groups associated with the UEs registered with the network slice, the numerical count of groups allowed by the network slice, the target policy, and whether the group identifier is added into a first list, where the first list includes group identifiers associated with the registered UEs; and/or
in response to the update flag requesting adding a UE associated with the network slice, determining to accept or reject registering the UE requesting registration with the network slice, according to the numerical count of groups associated with the UEs registered with the network slice, the numerical count of groups allowed by the network slice, the target policy, and whether the numerical count of UEs registered with the network slice is equal to a numerical count of UEs allowed to be registered with the network slice.

In the above embodiments, two implementations are provided for determining to accept or reject registering the UE requesting registration with the network slice according to the numerical count of groups. When the update flag request adding a UE associated with the network slice, the first core network function can determine whether to accept or reject registering the UE requesting registration request with the network slice according to the target policy corresponding to the group identifier, whether the numerical count of groups allowed by the network slice is reached, and whether the group identifier is a group identifier associated with the registered UEs or whether the numerical count of UEs allowed to be registered with the network slice is reached. Therefore, in the process of registering the at least one UE related to the group identifier to the network slice, the target policy corresponding to the group identifier, the group registration capability of the network slice, and the UE registration capability of the network slice are combined.

In conjunction with some embodiments of the first aspect, in some embodiments, in response to the update flag requesting adding a UE registered with the network slice, determining to accept or reject registering the UE requesting registration with the network slice, according to the numerical count of groups associated with the UEs registered with the network slice, a numerical count of groups allowed by the network slice, the target policy, and whether the group identifier is added into the first list, includes at least one of:
in response to the numerical count of groups associated with the UEs registered with the network slice being less than the numerical count of groups allowed by the network slice, the group identifier being not added into the first list, and the target policy being the first policy, determining to accept registering a UE associated with the same group identifier with the network slice;
in response to the numerical count of groups associated with the UEs registered with the network slice being equal to or greater than the numerical count of groups allowed by the network slice, the group identifier being not added into the first list, and the target policy being the first policy, determining to reject registering a UE associated with the same group identifier with the network slice;
in response to the numerical count of groups associated with the UEs registered with the network slice being less than the numerical count of groups allowed by the network slice, the group identifier being added into the first list, and the target policy being the first policy, determining to accept registering a UE associated with the same group identifier with the network slice;
in response to the numerical count of groups associated with the UEs registered with the network slice being equal to the numerical count of groups allowed by the network slice, the group identifier being added into the first list, and the target policy being the first policy, determining to accept registering a UE associated with the same group identifier with the network slice;
in response to the numerical count of groups associated with the UEs registered with the network slice being less than the numerical count of groups allowed by the network slice, the group identifier being not added into the first list, and the target policy being the second policy, adding a group identifier of a first priority into the first list, and determining to accept registering a UE of a group of the first priority with the network slice;
in response to the numerical count of groups associated with the UEs registered with the network slice being less than the numerical count of groups allowed by the network slice, the group identifier being not added into the first list, and the target policy being the second policy, adding a group identifier of a second priority into the first list, and determining to reject registering a UE of a group of the second priority to the network slice, where the second priority is lower than the first priority;
in response to the numerical count of groups associated with the UEs registered with the network slice being less than the numerical count of groups allowed by the network slice, the group identifier being added into the first list, and the target policy being the second policy, determining to accept registering the UE requesting registration with the network slice; or
in response to the numerical count of groups associated with the UEs registered with the network slice being equal to the numerical count of groups allowed by the network slice, the group identifier being added into the first list, and the target policy being the second policy, determining to accept or reject registering the UE requesting registration with the network slice according to a numerical count of UEs allowed to be registered with the network slice and a numerical count of UEs registered with the network slice.

In the above embodiments, in a case that the group identifier corresponds to different target strategies, whether the number of groups allowed by the network slice is reached or not, and/or whether the group identifier is a group identifier associated with the registered UEs, the first core network function determines whether to accept or reject the registration of the at least one UE associated with the group identifier to the network slice based on the specific circumstances. Therefore, in the process of registering the at least one UE related to the group identifier with the network slice, the target policy corresponding to the group identifier and the group capability allowed by the network slice are combined. There are multiple ways to accept or reject the UE registration, which makes the UE registration more flexible.

In conjunction with some embodiments of the first aspect, in some embodiments, in response to the numerical count of groups associated with the UEs registered with the network slice being equal to the numerical count of groups allowed by the network slice, the group identifier being added into the first list, and the target policy being the second policy, determining to accept or reject registering the UE requesting registration with the network slice according to the numerical count of UEs allowed to be registered with the network slice and the numerical count of UEs registered with the network slice, includes at least one of:
in response to the numerical count of groups associated with the UEs registered with the network slice being equal to the numerical count of groups allowed by the network slice, the group identifier being added into the first list, the target policy being the second policy, and a numerical count of UEs to be registered being less than or equal to a numerical count of UEs acceptable to be registered with the network slice, determining to accept registering the UE requesting registration with the network slice; or
in response to the numerical count of groups associated with the UEs registered with the network slice being equal to the numerical count of groups allowed by the network slice, the group identifier being added into the first list, the target policy being the second policy, and a numerical count of UEs to be registered being greater than a numerical count of UEs acceptable to be registered with the network slice, determining to accept registering a UE to be registered with a third priority with the network slice and to reject registering a UE to be registered with a fourth priority with the network slice, where the third priority is higher than the fourth priority,
where the numerical count of UEs acceptable to be registered with the network slice is a difference between the numerical count of UEs allowed to be registered with the network slice and the numerical count of UEs registered with the network slice.

In the above embodiments, when the numerical count of groups allowed to be activated in the network slice is reached, the group identifier is a group identifier associated with the registered UEs, and the registration of the UE requesting registration to the network slice is accepted or rejected based on the second policy, the first core network function accepts or rejects registering the at least one UE associated with the group identifier with the network slice according to whether the numerical count of UEs to be registered exceeds or does not exceed the number of UEs that can still be registered with the network slice. Therefore, in the process of the UE registration to the network slice, both the UE registration capacity of the network slice and the UE priority are taken into account.

In conjunction with some embodiments of the first aspect, in some embodiments, in response to the update flag requesting adding a UE associated with the network slice, determining to accept or reject registering the UE requesting registration with the network slice, according to the numerical count of groups associated with the UEs registered with the network slice, the numerical count of groups allowed by the network slice, the target policy, and whether the numerical count of UEs registered with the network slice is equal to the numerical count of UEs allowed to be registered with the network slice, includes at least one of:
in response to the numerical count of groups associated with the UEs registered with the network slice being equal to or greater than the numerical count of groups allowed by the network slice, the group identifier being not added into a first list, and the numerical count of UEs registered with the network slice being equal to the numerical count of UEs allowed to be registered with the network slice, determining to reject registering the UE requesting registration with the network slice;
in response to the numerical count of groups associated with the UEs registered with the network slice being equal to or greater than the numerical count of groups allowed by the network slice, the group identifier being added into a first list, and the numerical count of UEs registered with the network slice being equal to the numerical count of UEs allowed to be registered with the network slice, determining to reject registering the UE requesting registration with the network slice;
in response to the numerical count of groups associated with the UEs registered with the network slice being less than the numerical count of groups allowed by the network slice, the group identifier being not added into a first list, and the numerical count of UEs registered with the network slice being less than the numerical count of UEs allowed to be registered with the network slice, adding the group identifier into the first list and determining to accept registering the UE requesting registration with the network slice;
in response to the numerical count of groups associated with the UEs registered with the network slice being less than the numerical count of groups allowed by the network slice, the group identifier being not added into a first list, the numerical count of UEs registered with the network slice being greater than the numerical count of UEs allowed to be registered with the network slice, and the target policy being the first policy, determining to reject registering UEs to be registered of the same group with the network slice; or
in response to the numerical count of groups associated with the UEs registered with the network slice being less than the numerical count of groups allowed by the network slice, the group identifier being not added into the first list, the numerical count of UEs registered with the network slice being greater than the numerical count of UEs allowed to be registered with the network slice, and the target policy being the second policy, determining to accept registering a part of the at least one UE to be registered with the network slice and to reject registering another part of the at least one UE to be registered with the network slice according to the group priority of the at least one UE and/or the priority of the at least one UE,
where the first list includes group identifiers associated with the UEs registered with the network slice.

In the above embodiments, in a case that the group identifier corresponds to different target policies, whether the numerical count of groups allowed by the network slice is reached, whether the group identifier is a group identifier associated with the registered UEs, and whether the numerical count of UEs allowed to be registered with the network slice is reached, the first core network function determines whether to accept or reject registering the at least one UE associated with the group identifier with the network slice based on the specific circumstances. Therefore, in the process of registering the at least one UE related to the group identifier with the network slice, the target policy corresponding to the group identifier, the capability of the groups and the capability of the registered UEs allowed by the network slice are combined.

In conjunction with some embodiments of the first aspect, in some embodiments, performing the operation related to the registration of the UE to the network slice or the deregistration of the UE from the network slice according to the group identifier associated with the UE, includes at least one of:
in response to UEs of the group identifier being related to a plurality of service areas, and there existing at least one of the plurality of service areas in which a numeric count of UEs acceptable to be registered with a network slice is less than a numerical count of UEs to be registered and associated with the group identifier, determining to accept registering the UE requesting registration with the network slice; or
in response to UEs of the group identifier being related to a plurality of service areas, and there not existing any one of the plurality of service areas in which a numeric count of UEs acceptable to be registered with a network slice is less than a numerical count of UEs to be registered and associated with the group identifier, determining to reject registering the UE requesting registration with the network slice.

In the above embodiments, when the UEs associated with the group identifier are related to the plurality of service areas, the maximum numerical count of UEs allowed to be registered with a network slice within the plurality of service areas is used to determine whether to accept or reject registering the UE requesting registration with the network slice, thereby improving the correlation of registering the UEs corresponding to the same group identifier with the network slice.

In conjunction with some embodiments of the first aspect, in some embodiments, performing the operation related to the registration of the UE to the network slice or the deregistration of the UE from the network slice according to the group identifier associated with the UE includes:
in response to the update flag requesting removing a UE associated with the network slice, removing the UE.

In the above embodiments, after receiving the first request message, when the update flag in the first request message requests removing the UEs associated with the network device, the first core network function removes the UE, thereby decreasing the number of UEs registered with the network slice and thus releasing network resources.

In conjunction with some embodiments of the first aspect, in some embodiments, the method further includes:
registering a last UE of a group identifier with the network slice, and removing the group identifier from the first list;
where the first list includes group identifiers of the registered UEs.

In the above embodiments, after determining that the last UE associated with the group identifier is registered with the network slice, the first core network function can directly delete the group identifier from the first list, so as to update the numerical count of groups associated with the registered UEs on the network slice.

In conjunction with some embodiments of the first aspect, in some embodiments, the first request message includes:
a UE registration request; and/or
a UE registration availability check and update request.

In the above embodiments, by carrying the group identifier in the update request for the number of UE registrations and/or the availability check and update request for the number of UE registrations, existing signaling can be reused and signaling overhead can be reduced compared to carrying the group identifier in a dedicated request message.

In conjunction with some embodiments of the first aspect, in some embodiments, the first request message carries access type information, and the access type information indicates an access type of the UE, where the access type is used to determine a numerical count of UEs allowed, for the corresponding access type, to be registered with the network slice.

In the above embodiments, by carrying the access type information in the first request message, the first core network function can determine the access type of the UE based on the access type information, and then determine the operation related to the UE's registration to or deregistration from the network slice according to the number of UE registrations corresponding to access type that is allowed by the network slice.

In conjunction with some embodiments of the first aspect, in some embodiments, the method further includes:
sending a first response message to the second core network function, where the first response message indicates performing the operation related to the registration of the UE to the network slice or the deregistration of the UE from the network slice.

In the above embodiments, after the first core network function determines whether to accept or reject registering the UE requesting registration with the network slice, it can send the first response message to the second core network function to inform the second core network function that the UE requesting registration has been accepted or rejected, thereby facilitating the second core network function to determine whether to accept or reject registering the UE requesting registration with the network slice.

In conjunction with some embodiments of the first aspect, in some embodiments, the first core network function is the Network Slice Admission Control Function (NSACF).

In the above embodiments, the NSACF determines whether to accept or reject registering the UE requesting registration with the network slice, which can better control the UE registration to the network slice and improve the correlation of registering multiple UEs associated with the group identifier with the network slice.

In conjunction with some embodiments of the first aspect, in some embodiments, the NSACF includes:
an NSACF in a single centralized architecture;
an NSACF within a service area related to the second core network function in a non-hierarchical multi-NSACF architecture; or
a local NSACF or a main NSACF within a hierarchical multi-NSACF architecture.

In the above embodiments, the NSACF of any of the above three architectures can determine whether to accept or reject registering the UE requesting registration with the network slice, thereby enabling more methods of UE registration control and providing greater flexibility.

In a second aspect, embodiments of the present disclosure provide a method for UE registration. The method includes:
sending, by a second core network function, a first request message to a first core network function, where the first request message is related to a registration of a UE to a network slice or a deregistration of the UE from the network slice.

In a third aspect, embodiments of the present disclosure provide a method for UE registration. The method includes:
sending, by a UE, a second request message to a second core network function;
where the second request message is used to trigger the second core network function to send a first request message to a first core network function, and the first request message is related to a registration of the UE to a network slice or a deregistration of the UE from the network slice.

In a fourth aspect, embodiments of the present disclosure provide a method for UE registration. The method includes:
sending, by a UE, a second request message to a second core network function, where the second request message is used to trigger the second core network function to send a first request message to a first core network function, and the first request message is related to a registration of the UE to a network slice or a deregistration of the UE from the network slice;
sending, by the second core network function, the first request message to the first core network function; and
receiving, by the first core network function, the first request message sent by the second core network function, and performing an operation related to the registration of the UE to the network slice or the deregistration of the UE from the network slice according to a group identifier in the first request message.

In a fifth aspect, embodiments of the present disclosure provide a first core network device. The device includes:
a transceiver module, configured to receive, by the first core network function, a first request message sent by a second core network function, where the first request message is used to register a UE requesting registration with a network slice or to deregister the UE; and to perform an operation related to the registration of the UE to the network slice or the deregistration of the UE from the network slice according to a group identifier associated with the UE.

In a sixth aspect, embodiments of the present disclosure provide a second core network device. The device includes:
a transceiver module, configured to send, by the second core network function, a first request message to a first core network function, where the first request message is related to a registration of a UE to a network slice or a deregistration of the UE from the network slice.

In a seventh aspect, embodiments of the present disclosure provide a UE. The UE includes:
a transceiver module, configured to send by the UE, a second request message to a second core network function, where the second request message is used to trigger the second core network function to send a first request message to a first core network function, and the first request message is related to a registration of the UE to a network slice or a deregistration of the UE from the network slice.

In an eighth aspect, embodiments of the present disclosure provide a communication system. The communication system includes a first core network device and a second core network device. The second core network device is configured to implement the method for UE registration described in the implementations of the first aspect, and the first core network device is configured to implement the method for UE registration described in the implementations of the second aspect.

In a ninth aspect, embodiments of the present disclosure provide a communication device. The communication device includes:
at least one processor;
where the at least one processor is configured to invoke instructions to cause the communication device to perform the method described in the implementations of the first or second aspect.

In a tenth aspect, embodiments of the present disclosure provide a storage medium storing instructions that, when executed on a communication device, cause the communication device to perform the method described in the implementations of the first or second aspect.

In an eleventh aspect, embodiments of the present disclosure provide a program product that, when executed by a communication device, causes the communication device to perform the method described in the implementations of the first or second aspect.

In a twelfth aspect, embodiments of the present disclosure provide a computer program that, when run on a computer, causes the computer to perform the method described in the implementations of the first or second aspect.

It is understood that the aforementioned core network device, first device, communication device, communication system, storage medium, program product, and computer program are all used to execute the methods provided in embodiments of the present disclosure. Therefore, for beneficial effects they can achieve, reference can be made to the beneficial effects of the corresponding methods, and will not be repeated here.

The present disclosure provides a method and a device for UE registration, a communication device, a communication system, and a storage medium. In some embodiments, terms such as communication method and UE registration method can be used interchangeably, terms such as information indication apparatus, information processing apparatus, and information transmission apparatus can be used interchangeably, and terms such as communication system, information processing system can be used interchangeably.

Embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of steps in a certain embodiment may be arbitrarily exchanged. In addition, the implementations in a certain embodiment may be arbitrarily combined. Furthermore, the embodiments may be arbitrarily combined. For example, some or all of steps of different embodiments may be arbitrarily combined, and a certain embodiment may be arbitrarily combined with implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in embodiments of the present disclosure are only for the purpose of describing specific embodiments and are not intended to limit the present disclosure.

In embodiments of the present disclosure, unless otherwise specified, elements expressed in the singular form, such as "a", "an", "the", "above", "said", "aforementioned", "this", etc., may mean "one and only one", "one or more", or "at least one", etc. For example, when using articles such as "a", "an", "the" in English in translation, the noun after the article may be understood as a singular expression or a plural expression.

In embodiments of the present disclosure, "a plurality of" refers to two or more.

In some embodiments, terms "at least one", "one or more", "a plurality of", "multiple", or the like can be used interchangeably.

In some embodiments, "at least one of A and B", "A and/or B", "in one case, performing A, and in another case, performing B", "in response to one case, performing A, and in response to another case, performing B", may include the following technical solutions based on a situation: in some embodiments, performing A (performing An independently of B); in some embodiments, performing B (performing B independently of A); in some embodiments, selecting one from A and B for execution (selectively performing A or B); in some embodiments, performing A and B (performing both A and B). The same applies when there are more branches such as A, B, and C.

In some embodiments, the notation "A or B" may include the following technical solutions depending on situations: in some embodiments, A (A is executed regardless of B); in some embodiments, B (B is executed regardless of A); and in some embodiments, execution is selected from A and B (A and B are selectively executed). The same applies when there are more branches such as A, B, and C.

The prefixes such as "first" and "second" in embodiments of the present disclosure are only used for distinguishing different described objects, and do not constitute restrictions on the position, order, priority, quantity or content of the described objects. For the statement of the described object, reference may be made to the description in claims or embodiments, and should not constitute unnecessary restrictions due to the use of prefixes. For example, if the described object is a "field", the ordinal number before the "field" in the "first field" and the "second field" does not limit the position or order between the "fields", and the "first" and "second" do not limit whether the "fields" they define are in the same message, nor do they limit the order of the "first field" and the "second field". As another example, if the described object is a "level", the ordinal number before the "level" in the "first level" and the "second level" does not limit the priority between the "levels". As another example, the number of described objects is not limited by the ordinal number, and may be one or more. Taking the "first device" as an example, the number of "devices" may be one or more. In addition, the objects defined by different prefixes may be the same or different. For example, if the described object is "device", then the "first device" and the "second device" may be the same device or different devices, and their types may be the same or different. As another example, if the described object is "information" , then the "first information" and the "second information" may be the same information or different information, and their contents may be the same or different.

In some embodiments, "including A", "comprising A", "used for indicating A", and "carrying A" may be interpreted as directly carrying A or indirectly indicating A.

In some embodiments, terms such as "in response to ...", "in response to determining ...", "in the case of ...", "at the time of ...", "when ...", "if ...", or the like can be used interchangeably.

In some embodiments, terms such as "greater than", "greater than or equal to", "not less than", "more than", "more than or equal to", "not less than", "higher than", "higher than or equal to", "not lower than", and "above" can be used interchangeably, and terms such as "less than", "less than or equal to", "not greater than", "smaller than", "smaller than or equal to", "no more than", "lower than", "lower than or equal to", "not higher than", and "below" can be used interchangeably.

In some embodiments, the apparatus and device may be interpreted as physical or virtual, and their names are not limited to the names recorded in the embodiments. In some cases, they may also be understood as "equipment", "device", "circuit", "network element", "node", "function", "unit", "section", "system", "network", "chip", "chip system", "entity", "body", etc.

In some embodiments, the term "network" may be interpreted as devices included in the network, e.g., access network device, core network device, or the like.

In some embodiments, "access network device (AN device)", "radio access network device (RAN device)", "base station (BS)", "radio base station", or "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", or "bandwidth part (BWP)" can be used interchangeably.

In some embodiments, "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", and the like can be used interchangeably.

In some embodiments, the access network device, the core network device, or the network device may be replaced by the terminal. For example, various embodiments of the present disclosure may also be applied to a structure in which the communication between the access network device, the core network device, or the network device and the terminal is replaced by the communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, the uplink channel, the downlink channel, etc. may be replaced by the side channel, and the uplink, the downlink, etc. may be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the acquisition of data, information, etc. may comply with the laws and regulations of the country where the data is obtained.

In some embodiments, data, information, or the like may be obtained with the user's consent.

In addition, each element, each row, or each column in a table of embodiments of the present disclosure may be implemented as an independent embodiment, and a combination of any elements, any rows, and any columns may also be implemented as an independent embodiment.

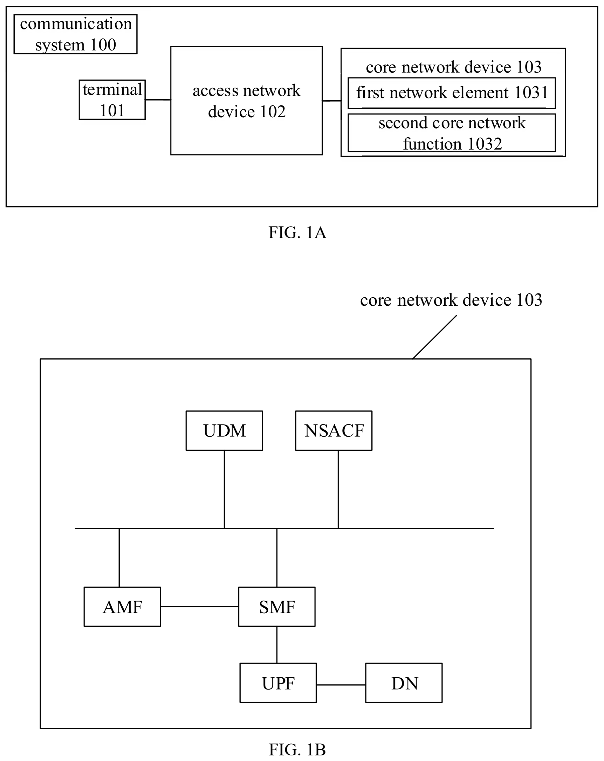

Fig. 1A is a schematic diagram of the architecture of a communication system according to an embodiment of the present disclosure.

As shown in Fig. 1A, the communication system 100 includes a terminal 101, an access network device 102, and a core network device 103.

In some embodiments, the terminal 101 includes, but is not limited to, at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device 102 may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited herein.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but is not limited herein.

In some embodiments, the core network device 103 may be a single device, including a first network element 1031, or it may be multiple devices or a group of devices, each including a first network element 1031. The network element may be virtual or physical. The core network may include, for example, at least one of an evolved packet core (EPC), a 5G core network (5GCN), or a next generation core (NGC)

In some embodiments, the first core network function 1031 is, for example, a Network Slice Admission Control Function (NSACF), which can be used at least for admission control of a UE using a network slice.

In some embodiments, the first core network function 1031 is used for network slice admission control, such as performing operations related to the registration or deregistration of the UE in the network slice, adding the group associated with the UE that has been registered to the network slice into the first list, etc., and the name is not limited thereto.

In some embodiments, the first core network function 1031 is used for access and mobility management, such as registration management, connection management, and mobility management, and the name is not limited thereto.

In some embodiments, the first core network function 1031 may be a network element independent of the core network device.

In some embodiments, the second core network function 1032 is, for example, an Access and Mobility Management Function (AMF).

In some embodiments, the second core network function 1032 is, for example, a Mobility Management Entity (MME).

It is understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art may know that with the evolution of the system architecture and the emergence of new service scenarios, the technical solution proposed in the embodiments of the present disclosure are also applicable to similar technical problems.

The following embodiments of the present disclosure may be applied to the communication system 100 shown in Fig. 1A, or to a part of the entities shown in Fig. 1A, but are not limited thereto. The entities shown in Fig. 1A are illustrative. The communication system may include all or some of the entities in Fig. 1A, or it may include other entities outside of Fig. 1A. The number and form of each entity are arbitrary. The connection relationship between the entities is illustrative. The entities may be connected or disconnected, and the connection may be in any manner, which may be a direct connection or an indirect connection, or may be a wired connection or a wireless connection.

[0132] The embodiments of the present disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

Referring to Fig. 1B, which is a schematic diagram of a core network device, the core network device 103 may include multiple functional units, such as an AMF, a Session Management Function (SMF), an NSACF, a User Plane Function (UPF), a Data Network (DN), and a Unified Data Management (UDM).

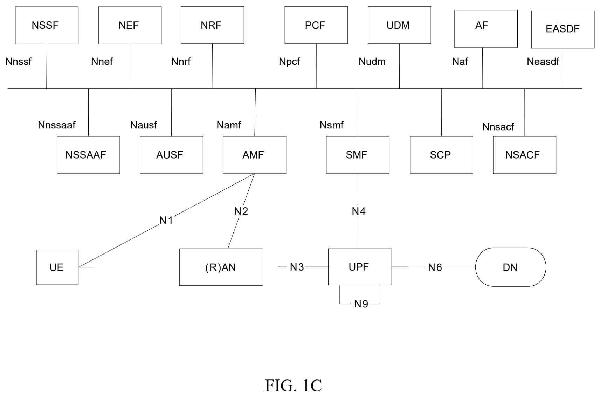

Referring to Fig. 1C, which is a schematic diagram of another type of core network device, this schematic diagram may be a schematic diagram of the relationship between various functional interfaces in the core network under the 5G network roaming status. Based on Fig. 1B, the core network device also includes:
a network slice selection function (NSSF), a network exposure function (NEF), a network repository function (NRF), a policy control function (PCF), an application function (AF), an authentication server function (AUSF), a session management function (SMF), a user plane function (UPF), a user equipment (UE), a (radio) access network ((R)AN), a service communication proxy function (SCP), a network slice specific authentication and authorization function (NSSAAF), and an edge application server discovery function (EASDF). The interfaces between the various functions may be connected via the corresponding interfaces shown in Fig. 1C.

Mobile media services, cloud AR/VR and other XR services, cloud gaming, and video-based remote control of machines or drones are expected to contribute increasingly higher traffic to a 5G network. In addition to audio and video streams, XR services also involve multimodal data streams, such as data streams for bio-tactile perception. The multimodal data refers to data input from the same or different devices (including sensors) for the same business or application, and the data may be output to one or more destination device terminals. The respective data streams in the multimodal data often have a certain or even strong correlation, such as synchronization of audio and video streams, or synchronization of tactile and visual senses. The data streams of these media services, the data streams themselves, the network transmission requirements of these service data streams, all share some common characteristics. Effective identification and utilization of these characteristics will be more helpful for transmission and control of the network and the services, as well as for service assurance and user experience.

The respective data streams of the XR multimodal service are highly correlated, and in many scenarios, the respective data streams of the service are distributed across multiple UEs. Regarding the admission control NSAC function, the admission control for the number of registered UEs in the network cannot support the multi-UE group admission function of the XR multimodal service. As a result, the access control policies for the UEs related to the XR multimodal service are inconsistent, which makes it impossible for the network to guarantee the user experience of the XR multimodal service, or even guarantee the normal provision of the service in specific scenarios.

The current network access control is a single UE policy. The access control policies for the UEs related to the XR multimodal service are inconsistent, which makes it impossible for the network to guarantee the user experience of the XR multimodal service, or even guarantee the normal provision of the service in specific scenarios. How to effectively enhance the network slice access control for the UEs related to the XR multimodal service and achieve consistency in access control policies for the UEs related to the XR multimodal service have become the problems to be solved by the present disclosure.

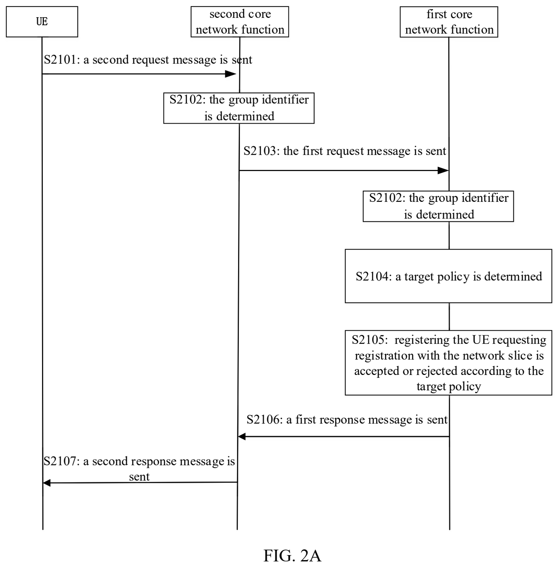

Fig. 2A is an interactive schematic diagram of a method for UE registration according to an embodiment of the present disclosure. As shown in Fig. 2A, the present disclosure relates to a method for UE registration for a communication system 100. The method includes the following steps.

S2101, a second request message is sent.

In some embodiments, a UE sends the second request message to a second core network function.

In some embodiments, the second request message is from the UE.

In some embodiments, the second core network function receives the second request message sent by the UE.

In some embodiments, the second core network function includes an AMF.

In some embodiments, the second request message includes a registration request message or a registration update message for the UE to register with a network slice.

In some embodiments, the registration request message may include, but is not limited to, a registration request identifier, a UE identifier, an access type, and/or a network slice identifier.

In some embodiments, the registration request message includes an AFM identifier, and an update flag used to request adding or removing UEs registered with the network slice.

In some embodiments, the second request message is used to trigger the second core network function to send a first request message to a first core network function, and the first request message is related to registering the UE requesting registration with a network slice.

In some embodiments, the first request message includes a group identifier, which indicates a group, and the group involves at least one UE.

In some embodiments, the second request message is used to trigger the second core network function to send a first request message including a group identifier to a first core network function, where the group identifier is used to indicate a group, and the group involves at least one UE; and the first request message is related to registering the UE requesting registration with a network slice.

In some embodiments, the method further includes: sending group-related information of the UE to the second core network function, where the group-related information is used to determine the group identifier associated with the UE requesting registration to the network slice.

In some embodiments, the UE sends the group-related information to the second core network function.

In some embodiments, the second request message includes at least a group identifier.

In some embodiments, a group identifier is used to indicate a group, and the group includes at least one UE or is related to the same service.

The group may be a UE group, involving at least one UE. The at least one UE within the UE group share a common characteristic.

In some embodiments, the group-related information includes at least one of:
a group identifier;
an XR multimodal service capability supported by the UE; or
a permanent device identifier (PEI) of the UE.

In some embodiments, the PEI is used to identify the UE.

In some embodiments, the UE may directly send the group identifier to the second core network function; or the UE may send the XR multimodal service capability supported by the UE and/or the PEI of the UE to the second core network function, so that the second core network function can determine the group identifier.

In some embodiments, the group identifier is associated with multiple related UEs.

In some embodiments, the group identifier may include an internal group identifier or a standardized universal group identifier.

In some embodiments, the group identifier is used to identify an XR service group or an application group to which the UE belongs.

In some embodiments, when the group identifier corresponds to a group that includes at least one UE, the group identifier may also identify at least one terminal associated with at least one UE.

In some embodiments, the XR multimodal service capability supported by the UE indicate:
whether the UE support the XR multimodal service;
a relevant service parameter of the XR multimodal service supported by the UE, such as a service identifier, a data type, a data source, etc.

It can be understood that the multiple UEs associated with the same group support the same XR multimodal service capability, and the XR multimodal service capabilities supported by UEs corresponding to different groups may be different.

S2102, the group identifier is determined.

In some embodiments, the first core network function determines the group identifier based on the first request message sent by the second core network function.

In some embodiments, the first request message includes a group identifier.

In some embodiments, the first core network function independently determines the group identifier associated with the UE requesting registration or the registered UE.

It should be noted that if the second core network function does not send the group identifier to the first core network function, or if the second core network function sends the first request message not containing the group identifier to the first core network function, the first core network may determine the group identifier on its own.

In some embodiments, the first core network function may determine the group identifier associated with the UE requesting registration or the registered UE based on a first configuration and/or first information.

In some embodiments, the first configuration includes at least one of:
a local configuration; or
an OAM Configuration.

In some embodiments, the first information is provided by a PCF or an NEF.

In some embodiments, the first information includes a group identifier, i.e., the PCF or NEF sends the group identifier to the AFM.

In some embodiments, the first information sent by the PCF or NEF may be provided by a configuration obtained by the PCF or NEF.

In some embodiments, the PCF or NEF dynamically obtains the stored group identifier and then sends the group identifier to the second core network function, namely the AFM.

In some embodiments, the second core network function determines the group identifier associated with the UE requesting registration with the network slice.

In some embodiments, the second core network function determines the group identifier associated with the UE requesting registration with the network slice, according to the second request message.

In some embodiments, the second core network function receives the second request message and determines an identifier of the UE.

In some embodiments, the second request message is used to request the registration of the UE to the network slice.

In some embodiments, the second core network determines the group identifier based on the group-related information carried in the second request message.

In some embodiments, the second core network function may determine the group identifier associated with the UE requesting registration with the network slice based on a second configuration.

In some embodiments, the second configuration may include a local configuration or an OAM configuration. The OAM configuration provides configuration information for an OAM device.

In some embodiments, the local configuration may be a local configuration of the second core network function.

In some embodiments, the second core network function may determine the group identifier associated with the UE requesting registration with the network slice based on subscription information of a unified data management (UDM) function.

In some embodiments, the UDM function is used to process user identification, access authentication, registration, or mobility management, etc. It can be understood that the UDM function may store contract information of each registered terminal.

The second core network function may send a subscription information query request to the UDM based on the UE ID carried in the second request message, and determine the group identifier based on subscription information corresponding to the UE ID returned by the UDM.

In some embodiments, the second core network function may determine the group identifier associated with the UE requesting registration with the network slice based on an XR multimodal service capability supported by the UE.

The second core network function may determine the XR multimodal service capability supported by the UE indicated by the UE ID according to the UE ID carried in the second request message, and determine the group identifier based on the XR multimodal service capability supported by the UE.

In some embodiments, the second core network function may determine the group identifier of the UE requesting registration based on the PEI of the UE.

In some embodiments, the second core network function determines the group identifier associated with the UE requesting registration with the network slice based on UE context information sent by an AMF.

The second core network function may send a request to the AMF based on the UE ID carried in the second request message to obtain relevant information of the UE XR multimodal corresponding to the UE; and determine the group identifier based on the relevant information of the UE XR multimodal.

S2103, the first request message is sent.

In some embodiments, the second core network function sends the first request message to the first core network function.

In some embodiments, the second core network function sends the first request message to the first core network function according to the second request message.

In some embodiments, the first request message is used to register a UE requesting registration with a network slice or to deregister the UE.

In some embodiments, the first request message includes the group identifier.

For example, the group identifier is the group identifier associated with the UE requesting registration.

In some embodiments, the first request message contains the group identifier, and the group corresponding to the group identifier includes at least one UE.

In some embodiments, the first request message does not contain the group identifier.

In some embodiments, the first request message is related to the registration of the UE to the network slice or the deregistration of the UE from the network slice.

In some embodiments, the first core network function includes a capability for performing the operation related to the registration of the UE to the network slice or the deregistration of the UE from the network slice. For example, the first core network function is an NSACF.

In some embodiments, the NSACF includes:
an NSACF in a single centralized architecture;
an NSACF within a service area related to the second core network function in a non-hierarchical multi-NSACF architecture; or
a local NSACF or a main NSACF within a hierarchical multi-NSACF architecture.

In some embodiments, a single centralized NSACF may be an NSACF of a single Public Land Mobile Network (PLMN).

In some embodiments, the second core network function in the non-hierarchical multi-NSACF architecture is an NSACF within a relevant service area. Multiple parallel NSACFs are set within one PLMN to be responsible for registering UEs from different service areas to the network slice.

For example, each NSACF is responsible for one or more service areas, and each NSACF is responsible for access control of the number of registered users within the one or more service areas.

For example, the NSACF is an NSACF within a UE registered service area.

In some embodiments, the local NSACF within the hierarchical multi-NSACF architecture includes multi-level NSACFs, the multi-level NSACFs includes a primary NSACF and the next-level NSACF for the primary NSACF or multiple levels of NSACFs.

In some embodiments, the first request message includes an update flag.

In some embodiments, the update flag is used to request adding or removing a UE registered with the network slice.

In some embodiments, the update flag includes a flag value, and different flag values indicate different contents. For example, a first flag value may indicate addition of a UE registered with a network slice, and a second flag value may indicate removal of a UE registered with a network slice. The first flag value is different from the second flag value.

In some embodiments, the update flag carried in the first request message requests adding the UEs registered with the network slice.

In some embodiments, the first request message includes slice identification information indicating a network slice associated with the UE requesting registration.

In some embodiments, the slice identification information includes: a network slice identifier (ID), or a network slice identifier list S-NSSAI(s).

In some embodiments, the first request message carries access type information indicating an access type of the UE.

In some embodiments, the access type may include: 3GPP access and/or non-3GPP access.

It should be noted that the 3GPP access refers to access methods that comply with 3GPP standards. For example, 3GPP access may include: UMTS Terrestrial Radio Access Network (UTRAN) access, Evolved UMTS Terrestrial Radio Access Network (E-UTRAN) access, or GSM/EDGE Radio Access Network (GERAN) access, etc.

The mon-3GPP access refers to access methods that do not conform to the 3GPP standards, such as Wireless Fidelity (Wi-Fi) access, wired access, Code Division Multiple Access (CDMA) access, and/or Bluetooth access.

In some embodiments, the access type is used to determine a numerical count of UEs corresponding to the network slice allowed to be registered with the network slice.

In some embodiments, the first request message may include:
a UE registration request; and/or
a UE registration availability check and update request.

In some embodiments, the UE registration request is used for the UE to request registration to a network slice.

In some embodiments, the UE registration availability check and update request is used to request the check and update of UEs registered with the network slice.

In some embodiments, if the availability check of the number of registered UEs indicates that the availability check is successful, it means that the UEs registered with the network slice may be updated; if the availability check of the number of registered UEs indicates that the availability check fails, it means that the UEs registered with the network slice cannot be updated.

S2104, a target policy is determined.

In some embodiments, the first core network function determines the target policy based on the group identifier.

In some embodiments, the target policy is used to determine whether to accept or reject registering the UE requesting registration in the group corresponding to the group identifier with the network slice.

In some embodiments, different group identifiers correspond to different target strategies.

In some embodiments, the target policy may include one of:
a first policy, rejecting or accepting registering any of the at least one UE in the group corresponding to the group identifier with the network slice; or
a second policy, rejecting or accepting registering the at least one UE in the group corresponding to the group identifier with the network slice according to a priority associated with the at least one UE.

If the target policy corresponding to the group identifier carried in the first request message is the first policy, the first core network function may apply the same registration processing policy to all UEs associated with the group identifier, thereby improving the correlation for registering the UEs associated with the same group identifier with the network slice. For example, the first core network function may accept registering all UEs associated with the group identifier with the network slice; or the first core network function may reject registering all UEs associated with the group identifier with the network slice.

If the target policy corresponding to the group identifier carried in the first request message is the second policy, the first core network function rejects registering the at least one UE requesting registration and associated with the group identifier with the network slice according to the priority associated with the at least one UE.

In some embodiments, the priority includes: a group priority of the at least one UE and/or a UE priority.

In some embodiments, the first core network function accepts registering a UE associated with a group identifier of higher priority with the network slice, and rejects registering a UE associated with a group identifier of lower priority with the network slice, according to the group priority of the at least one UE.

In some embodiments, the first core network function may also accept a registration of a UE with higher priority among the multiple UEs associated with the group identifier to the network slice; and reject a registration of a UE with lower priority among multiple UEs associated with the group identifier to the network slice.

By determining the target policy, the flexibility of the UE registration is improved.

S2105, registering the UE requesting registration with the network slice is accepted or rejected according to the target policy.

In some embodiments, the first core network function accepts or rejects registering the UE requesting registration with the network slice according to the target policy and a numerical count of groups associated with the UEs registered to the network slice.

In some embodiments, the first core network function accepts or rejects registering the UE requesting registration with the network slice according to the target policy and a numerical count of UEs registered with the network slice.

In some embodiments, when the update flag requests adding a UE registered with the network slice, the first core network function determines to accept or reject registering the UE requesting registration with the network slice, according to the numerical count of UEs registered with the network slice, a numerical count of UEs allowed to be registered with the network slice, and the target policy.

Here, the numerical count of UEs allowed to be registered with the network slice is used to determine the maximum number of UEs that can be registered with the network slice.

In some embodiments, whether the maximum number of UEs that can be registered with the network slice is reached is determined according to the numerical count of UEs registered with the network slice and the numerical count of UEs allowed to be registered with the network slice.

It can be understood that if the numerical count of UEs registered with the network slice is less than the numerical count of UEs allowed to be registered with the network slice, it is determined that the maximum number of UEs that can be registered with the network slice has not been reached; if the numerical count of UEs registered with the network slice is greater than or equal to the numerical count of UEs allowed to be registered with the network slice, it is determined that the maximum number of UEs that can be registered with the network slice has been reached.

When determining to accept or reject the UE requesting registration to the network slice, the first core network function does not need to consider the numerical count of groups already registered with the network slice.

In some embodiments, when the update flag requests adding a UE registered with the network slice, whether to accept or reject registering the UE requesting registration with the network slice is determined based on the numerical count of groups associated with UEs registered with the network slice, the numerical count of groups allowed by the network slice, and the target policy.

Here, the numerical count of groups allowed by the network slice is used to determine a maximum numerical count of groups related to the registered UE that the network slice can support.

It should be noted that the first core network function may configure a group threshold for network slices, whether the group threshold of the network slice is reached may be determined based on the numerical count of groups associated with the UEs registered with the network slice and the numerical count of groups allowed by the network slice.

In some embodiments, the first list includes group identifiers associated with the registered UEs.

Based on whether the group identifier is added into the first list, it may be determined whether the group associated with the UE requesting registration is the same as a group associated with the UE registered with the network slice.

If the group identifier is added into the first list, it means that the group associated with the UE requesting registration is the same as the group associated with the UE already registered with the network slice. That is, the UE requesting registration is in the same group as at least one registered UE in the network slice. If the group identifier is not added into the first list, it means that the group associated with the UE requesting registration is different from the group associated with the UE already registered with the network slice.

The first core network function, by determining whether the group identifier is added into the first list, determines whether the UE registration requested by the first request message will cause an update of the numerical count of groups associated with the UE registered with the network slice.

In some embodiments, when determining to accept or reject registering the UE requesting registration with the network slice, the first core network function may consider the target policy and whether the group threshold of the network slice is reached. In this case, the maximum numerical count of groups supportable by the network slice and/or the numerical count of registered UEs is not considered.

In some embodiments, when the update flag requests adding a UE associated with the network slice, it is determined to accept or reject registering the UEs requesting registration with the network slice according to the numerical count of groups of UEs registered with the network slice, the numerical count of groups allowed by the network slice, the target policy, and whether the numerical count of UEs registered with the network slice is equal to the numerical count of UEs allowed to be registered with the network slice.

The first core network may determine whether to accept or reject registering the UE requesting registration with the network slice based on the target policy, whether the maximum numerical count of UEs allowed to be registered with the network slice is reached, and whether the threshold of the groups allowed by the network slice is reached.

In some embodiments, in response to the update flag requesting adding a UE registered with the network slice, determining to accept or reject registering the UE requesting registration with the network slice according to the numerical count of groups associated with the UEs registered with the network slice, the numerical count of groups allowed by the network slice, the target policy and whether the group identifier is added into the first list includes at least one of:
in response to the numerical count of groups associated with the UEs registered with the network slice being less than the numerical count of groups allowed by the network slice, the group identifier being not added into the first list, and the target policy being the first policy, determining to accept registering a UE associated with the same group identifier with the network slice;
in response to the numerical count of groups associated with the UEs registered with the network slice being equal to or greater than the numerical count of groups allowed by the network slice, the group identifier being not added into the first list, and the target policy being the first policy, determining to reject registering a UE associated with the same group identifier with the network slice;
in response to the numerical count of groups associated with the UEs registered with the network slice being less than the numerical count of groups allowed by the network slice, the group identifier being added into the first list, and the target policy being the first policy, determining to accept registering a UE associated with the same group identifier with the network slice;
in response to the numerical count of groups associated with the UEs registered with the network slice being equal to the numerical count of groups allowed by the network slice, the group identifier being added into the first list, and the target policy being the first policy, determining to accept registering a UE associated with the same group identifier with the network slice;
in response to the numerical count of groups associated with the UEs registered with the network slice being less than the numerical count of groups allowed by the network slice, the group identifier being not added into the first list, and the target policy being the second policy, adding a group identifier of a first priority into the first list, and determining to accept registering a UE of a group of the first priority with the network slice;
in response to the numerical count of groups associated with the UEs registered with the network slice being less than the numerical count of groups allowed by the network slice, the group identifier being not added into the first list, and the target policy being the second policy, adding a group identifier of a second priority into the first list, and determining to reject registering a UE of a group of the second priority with the network slice, where the second priority is lower than the first priority;
in response to the numerical count of groups associated with the UEs registered with the network slice being less than the numerical count of groups allowed by the network slice, the group identifier being added into the first list, and the target policy being the second policy, determining to accept registering the UE requesting registration with the network slice; or
in response to the numerical count of groups associated with the UEs registered with the network slice being equal to the numerical count of groups allowed by the network slice, the group identifier being added into the first list, and the target policy being the second policy, determining to accept or reject registering the UE requesting registration with the network slice according to a numerical count of UEs allowed to be registered with the network slice and a numerical count of UEs registered with the network slice.

The target policy and whether the group threshold of the network slice is reached are combined to determine whether to accept or reject registering the UE requesting registration with the network slice. If the target policy is the first policy and the group identifier has been added into the first list, the first core network function accepts registering respective UEs associated with the group identifier with the network slice, regardless of whether the group threshold of the network slice is reached.

When the group identifier has been added into the first list, even if the first core network function accepts registering the UE associated with the group identifier with the network slice, the numerical count of groups associated with the registered UEs in the network slice will not increase. In this case, regardless of whether the group threshold of the network slice is reached, the first core network function accepts registering respective UEs associated with the group identifier with the network slice.

When the target policy is the first policy and the group identifier is not added into the first list, it is determined whether to accept or reject registering any UE associated with the group identifier with the network slice according to whether the numerical count of groups associated with the UEs registered with the network slice is equal to or greater than the numerical count of groups allowed by the network slice, i.e. whether the group threshold of the network slice is reached.

When the target policy is the second policy, which is to reject registering the at least one UE associated with the group identifier with the network slice according to the priority associated with the at least one UE, it is determined to accept or reject registering the at least one UE associated with the group identifier with the network slice according to whether the group identifier is added into the first list and whether the numerical count of groups associated with the UEs registered with the network slice is equal to or greater than the numerical count of groups allowed by the network slice.

In a case where the numerical count of groups associated with UEs registered with the network slice is less than the numerical count of groups allowed by the network slice, i.e., the group threshold of the network slice is not reached, and the group identifier has not been added into the first list, the first core network function may accept or reject registering respective UEs associated with the group identifier with the network slice according to the group priority of the at least one UE in the group associated with the group identifier. In this case, the first core network function determines to accept registering a UE of a group with a first priority (the group priority of the UE is higher) with the network slice, and to reject registering a UE of a group with a second priority (the group priority of the UE is lower) with the network slice.

In a case that the numerical count of groups associated with UEs registered with the network slice is less than the numerical count of groups allowed by the network slice, i.e., the group threshold of the network slice has not been reached, and the group identifier is added into the first list, the first core network function may accept registering the UE with the network slice.

In some embodiments, in response to the numerical count of groups associated with the UEs registered with the network slice being equal to the numerical count of groups allowed by the network slice, the group identifier being added into the first list, and the target policy being the second policy, determining to accept or reject registering the UE requesting registration with the network slice according to the numerical count of UEs allowed to be registered with the network slice and the numerical count of UEs registered with the network slice includes at least one of:
in response to the numerical count of groups associated with the UEs registered with the network slice being equal to the numerical count of groups allowed by the network slice, the group identifier being added into the first list, the target policy being the second policy, and a numerical count of UEs to be registered being less than or equal to a numerical count of UEs acceptable to be registered with the network slice, determining to accept registering the UE requesting registration with the network slice; or
in response to the numerical count of groups associated with the UEs registered with the network slice being equal to the numerical count of groups allowed by the network slice, the group identifier being added into the first list, the target policy being the second policy, and a numerical count of UEs to be registered being greater than a numerical count of UEs acceptable to be registered with the network slice, determining to accept registering a UE to be registered with a third priority with the network slice and to reject registering a UE to be registered with a fourth priority with the network slice, where the third priority is higher than the fourth priority,
where the numerical count of UEs acceptable to be registered with the network slice is a difference between the numerical count of UEs allowed to be registered with the network slice and the numerical count of UEs registered with the network slice.

In a case that the numerical count of groups associated with UEs registered with the network slice is equal to the numerical count of groups allowed by the network slice, i.e., the group threshold in the network slice has been reached, and the group identifier has been added into the first list, if the target policy is the second policy, the first core network function needs to further determine whether the numerical count of UEs to be registered is greater than the numerical count of UEs that can still be registered with the network slice.

If the numerical count of UEs to be registered is less than or equal to the numerical count of UEs that can still be registered with the network slice, even if the first core network function accepts registering the UEs to be registered with the network slice, the numerical count of UEs registered with the network slice will not exceed the numerical count of UEs allowed to be registered with the network slice. In this case, the first core network function determines to accept registering the UE requesting registration with the network slice.

If the numerical count of UEs to be registered is greater than the numerical count of UEs that can still be registered with the network slice, that is, when the first core network function accepts registering the UEs to be registered with the network slice, the numerical count of UEs registered with the network slice will exceed the numerical count of UEs allowed to be registered with the network slice. In this case, the first core network function determines, according to the UE priorities of the UEs to be registered, to accept registering a UE to be registered with the third priority (higher UE priority) with the network slice, and to reject registering a UE to be registered with the fourth priority (lower UE priority) with the network slice.

In some embodiments, in response to the update flag requesting adding a UE associated with the network slice, determining to accept or reject registering the UE requesting registration with the network slice, according to the numerical count of groups associated with the UEs registered with the network slice, the numerical count of groups allowed by the network slice, the target policy, and whether the numerical count of UEs registered with the network slice is equal to the numerical count of UEs allowed to be registered with the network slice includes at least one of:
in response to the numerical count of groups associated with the UEs registered with the network slice being equal to or greater than the numerical count of groups allowed by the network slice, the group identifier being not added into a first list, and the numerical count of UEs registered with the network slice being equal to the numerical count of UEs allowed to be registered with the network slice, determining to reject registering the UE requesting registration with the network slice;
in response to the numerical count of groups associated with the UEs registered with the network slice being equal to or greater than the numerical count of groups allowed by the network slice, the group identifier being added into a first list, and the numerical count of UEs registered with the network slice being equal to the numerical count of UEs allowed to be registered with the network slice, determining to reject registering the UE requesting registration with the network slice;
in response to the numerical count of groups associated with the UEs registered with the network slice being less than the numerical count of groups allowed by the network slice, the group identifier being not added into a first list, and the numerical count of UEs registered with the network slice being less than the numerical count of UEs allowed to be registered with the network slice, adding the group identifier into the first list and determining to accept registering the UE requesting registration with the network slice;
in response to the numerical count of groups associated with the UEs registered with the network slice being less than the numerical count of groups allowed by the network slice, the group identifier being not added into a first list, the numerical count of UEs registered with the network slice being greater than the numerical count of UEs allowed to be registered with the network slice, and the target policy being the first policy, determining to reject registering a UE to be registered and of the same group with the network slice; or
in response to the numerical count of groups associated with the UEs registered with the network slice being less than the numerical count of groups allowed by the network slice, the group identifier being not added into a first list, the numerical count of UEs registered with the network slice being greater than the numerical count of UEs allowed to be registered with the network slice, and the target policy being the second policy, determining to accept registering a part of the at least one UE to be registered with the network slice and to reject registering another part of the at least one UE to be registered with the network slice according to the group priority of the at least one UE and/or the priority of the at least one UE,
where the first list includes group identifiers associated with the UEs registered with the network slice.

In an embodiment, the rejected part of the at least one UE to be registered includes the UE(s) to be registered that remains by excluding those have been accepted to register with the network slice from the UEs to be registered.

The target policy, whether the group threshold of the network slice is reached, whether the maximum numerical count of UEs that the network slice can activate is reached, and whether the group identifier is added into the first list are combined, when determining to accept or reject registering the UE requesting registration with the network slice, if the numerical count of groups associated with the UEs registered with the network slice is equal to or greater than the numerical count of groups allowed by the network slice, and the numerical count of UEs registered with the network slice is equal to or greater than the numerical count of UEs allowed to be register with the network slice, that is, if both the group threshold of the network slice and the maximum numerical count of UEs that can be registered with the network slice are reached, the first core network function will reject registering the UE with the network slice regardless of whether the group identifier is added into the first list.

When the numerical count of groups associated with UEs registered with the network slice is less than the numerical count of groups allowed by the network slice, and the numerical count of UEs registered with the network slice is less than the numerical count of UEs allowed to be registered with the network slice, that is, when neither the group threshold of the network slice nor the maximum numerical count of UEs that can be registered with the network slice is reached, if the group identifier is not added into the first list, the first core network function accepts registering the UE to be registered with the network slice.

When the numerical count of groups associated with UEs registered with the network slice is less than the numerical count of groups allowed by the network slice, and the numerical count of UEs registered with the network slice is greater than or equal to the numerical count of UEs allowed to be registered with the network slice, i.e., the group threshold of the network slice is not reached, and the maximum numerical count of UEs that can be registered with the network slice is reached, if the target policy is the first policy, it is determined to reject registering any UE to be registered in the same group with the network slice, if the target policy is the second policy, it is determined, according to the group priority of the at least one UE and/or the UE priority, to accept registering a part of the UEs to be registered with the network slice, and to reject registering another part of the UEs to be registered with the network slice .

In some embodiments, in response to the update flag requesting adding a UE registered with the network slice, determining to accept or reject registering the UE requesting registration with the network slice according to the numerical count of UEs registered with the network slice, the numerical count of UEs allowed to be registered with the network slice and the target policy, includes at least one of:
in response to the numerical count of UEs registered with the network slice being equal to or greater than the numerical count of UEs allowed to be registered with the network slice, and the target policy being the first policy, determining to reject registering the UE requesting registration with the network slice;
in response to the numerical count of UEs registered with the network slice being less than the numerical count of UEs allowed to be registered with the network slice, and the target policy being the first policy, determining to accept registering the UE requesting registration with the network slice;
in response to the numerical count of UEs registered with the network slice being equal to or greater than the numerical count of UEs allowed to be registered with the network slice, and the target policy being the second policy, determining to reject registering the UE requesting registration with the network slice;
in response to the numerical count of UEs registered with the network slice being less than the numerical count of UEs allowed to be registered with the network slice, the target policy being the second policy, and a numerical count of UEs to be registered being less than or equal to a numerical count of UEs acceptable to be registered with the network slice, determining to accept registering the UE requesting registration with the network slice; or
in response to the numerical count of UEs registered with the network slice being less than the numerical count of UEs allowed to be registered with the network slice, the target policy being the second policy, and a numerical count of UEs to be registered being greater than a numerical count of UEs acceptable to be registered with the network slice, determining to accept registering a part of the at least one UE requesting registration with the network slice and to reject registering another part of the at least one UE requesting registration with the network slice, according to the group priority of the at least one UE in a group associated with the at least one UE to be registered and/or the priority of the at least one UE,
where the numerical count of UEs acceptable to be registered with the network slice is a difference between the numerical count of UEs allowed to be registered with the network slice and the numerical count of UEs registered with the network slice.

By combining the target policy and whether the maximum numerical count of UEs that can be activated by the network slice is reached, it is determined whether to accept or reject registering the UE requesting registration with the network slice. If the target policy is the first policy, that is, when the same registration policy is executed on any of the UEs associated with the group identifier, it may be determined whether to accept or reject registering the UE requesting registration with the network slice according to whether the numerical count of UEs registered with the network slice is greater than or equal to the numerical count of UEs allowed to be registered with the network slice, that is, whether the maximum numerical count of UEs that can be registered with the network slice is reached.

If the target policy is the second policy, which is to reject registering at least one UE associated with the group identifier with the network slice according to the priority associated with the at least one UE, it is determined to accept or reject registering the at least one UE associated with the group identifier with the network slice according to whether the numerical count of UEs registered with the network slice is greater than or equal to the numerical count of UEs allowed to be registered with the network slice, i.e., whether the maximum numerical count of UEs that can be registered with the network slice is reached, and whether the numerical count of UEs to be registered is greater than the number of UEs that can still be registered with the network slice.

If the numerical count of UEs registered with the network slice is greater than or equal to the numerical count of UEs allowed to be registered with the network slice, i.e., the maximum numerical count of UEs that can be registered with the network slice is reached, the first core network function may reject registering respective UE associated with the group identifier with the network slice.

If the numerical count of UEs registered with the network slice is less than the numerical count of UEs allowed to be registered with the network slice, i.e., the maximum numerical count of UEs that can be registered with the network slice is not reached, it is required to further determine whether the numerical count of UEs to be registered is greater than the number of UEs that can still be registered with the network slice.

If the numerical count of UEs to be registered is less than or equal to the numerical count of UEs that can still be registered with the network slice, even if the first core network function accepts registering the UE to be registered with the network slice, the numerical count of UEs registered with the network slice will not exceed the numerical count of UEs allowed to be registered with the network slice. In this case, the first core network function determines to accept registering any UE associated with the group identifier with the network slice.

If the numerical count of UEs to be registered is greater than the numerical count of UEs that can still be registered with the network slice, that is, if the first core network function accepts the UEs to be registered to register to the network slice, the numerical count of UEs registered with the network slice will exceed the numerical count of UEs allowed to be registered with the network slice. In this case, the first core network function may determine, according to the group priority and/or the UE priority associated with the group to be registered UE, whether to accept registering a part of the UEs to be registered with the network slice and to reject registering another part of the UEs to be registered with the network slice.

In some embodiments, the method further includes:
in response to accepting registering the UE requesting registration with the network slice and the group identifier being not added into a first list, adding the group identifier into the first list, where the first list includes group identifiers associated with the UEs registered with the network slice.

In a case that the group identifier is not added into the first list, the group identifier is added into the first list, and the registered UE and the corresponding group identifier are associated. If the group identifier has already been added into the first list, it does not need to be added again. The registered UE and the corresponding group identifier may be associated directly.

In some embodiments, performing the operation related to the registration of the UE to the network slice or the deregistration of the UE from the network slice according to the group identifier associated, include at least one of:
in response to UEs of the group identifier being related to a plurality of service areas, and there existing at least one of the plurality of service areas in which a numeric count of UEs acceptable to be registered with a network slice is less than a numerical count of UEs to be registered and associated with the group identifier, determining to accept registering the UE requesting registration with the network slice; or
in response to UEs of the group identifier being related to a plurality of service areas, and there not existing any one of the plurality of service areas in which a numeric count of UEs acceptable to be registered with a network slice is less than a numerical count of UEs to be registered and associated with the group identifier, determining to reject registering the UE requesting registration with the network slice.

In some embodiments, the service area may be a network area.

S2106, a first response message is sent.

In some embodiments, the first core network function sends the first response message to the second core network function.

In some embodiments, the method further includes: receiving, by the second core network function, the first response message sent by the first core network function.

In some embodiments, the first response message is a response message from a first core network function for the first request message.

In some embodiments, the first response message indicates whether to accept or reject registering the UE requesting registration with the network slice.

In some embodiments, the first response message indicates accepting registering the UE requesting registration with the network slice, and the second core network function accepts registering the UE requesting registration with the network slice.

S2107, a second response message is sent.

In some embodiments, the second core network function sends the second response message to the UE.

In some embodiments, the method further includes: receiving, by the UE, the second response message sent by the second core network function.

In some embodiments, the second response message indicates whether to accept or reject registering the UE requesting registration with the network slice.

In some embodiments, the second response message is a response message from the second core network function for the second request message.

In some embodiments, the term "information" may be used interchangeably with terms such as "message", "signal", "signaling", "report", "configuration", "indication", "instruction", "command", "channel", "parameter", "field", "data", etc.

In some embodiments, the term "send" may be used interchangeably with terms such as "transmit", "report", "transmission", etc.

The method for UE registration disclosed in the embodiments may include at least one of S2101 to S2107. For example, S2101 combined with S2103 to S2107 may be implemented as an independent embodiment, and S2101 combined with S2103 and S2106 to S2107 may be implemented as an independent embodiment, but is not limited thereto.

In some embodiments, S2102 may be performed, and one or more of these steps may be omitted or substituted in different embodiments. It can be understood that the UE may carry the group identifier in the second request message, and thus the second core network function is not required to determine the group identifier of the UE requesting registration.

In some embodiments, S2102 and S2104 may be performed, and one or more of these steps may be omitted or substituted in different embodiments. It can be understood that the first core network function directly considers the group identifier when accepting or rejecting registering the UE requesting registration with the network slice, without determining the target policy.

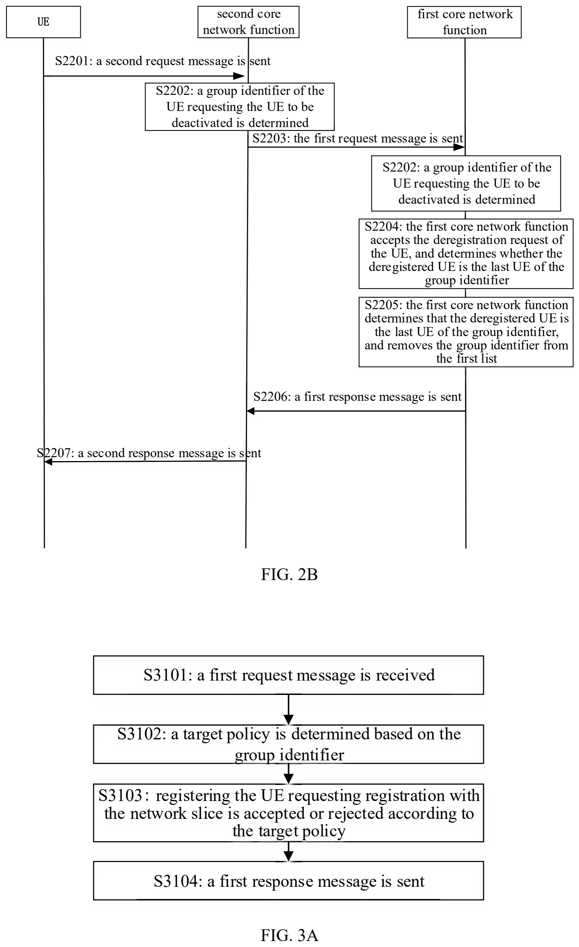

In some embodiments, based on the registration method shown in Fig. 2A, Fig. 2B is an interactive schematic diagram of a method for UE registration according to an embodiment of the present disclosure.

As shown in Fig. 2B, the present disclosure relates to a method for UE registration for a communication system 100, the method includes:
S2201, a second request message is sent.

In some embodiments, the UE sends the second request message to the second core network function, requesting to register the UE in the network slice.

In some embodiments, implementations of S2201 may be found in implementations of step S2101 in Fig. 2A and other relevant parts in the embodiments involved in Fig. 2A, which will not be repeated here.

In some embodiments, the second request message may be a deregistration request of the UE.

In some embodiments, the deregistration request of the UE may carry a deregistration request identifier ID of the UE, a UE identifier, and/or a network slice identifier, but is not limited thereto.

In some embodiments, the second request message is used to trigger the second core network function to send a first request message to a first core network function, the first request message being related to the deregistration of the UE.

S2202, a group identifier of the UE requesting the UE to be deactivated is determined.

In some embodiments, the second core network function determines the group identifier of the UE that requests the UE to be deactivated.

In some embodiments, implementations of S2202 may be found in the implementations of S2102 in Fig. 2A and other related parts in the embodiments involved in Fig. 2A, which will not be repeated here.

S2203, the first request message is sent.

In some embodiments, the second core network function sends the first request message to the first core network function; where the first request message contains the group identifier.

In some embodiments, the first request message does not contain the group identifier.

In some embodiments, implementations of S2203 may be found in the implementations of S2103 in Fig. 2A and other related parts in the embodiments related to Fig. 2A, which will not be repeated here.

In some embodiments, the second request message is a deregistration request of the UE, and an update flag carried in the first request message requests removing the registered UE associated with the network slice.

In some embodiments, the first core network function determines a target policy based on the group identifier.

In some embodiments, the target policy may include one of:
a first policy, used to accept deregistering any of at least one UE associated with the group identifier; or
a second policy, used to accept deregistering at least one UE associated with the group identifier according to a priority associated with the at least one UE.

In some embodiments, the priority includes: a group priority of the at least one UE and/or a UE priority.

S2204, the first core network function accepts the deregistration request of the UE, and determines whether the deregistered UE is the last UE of the group identifier.

In some embodiments, the update flag requests removing the registered UE associated with the network slice, and the first core network accepts deregistering the UE.

In some embodiments, when the update flag requests removing the registered UE associated with the network slice, and the target policy is the first policy, the first core network function accepts deregistering any of the at least one UE associated with the group identifier.

In some embodiments, the update flag requests removing the registered UE associated with the network slice, and the target policy is the second policy, the first core network function accepts deregistering the at least one UE associated with the group identifier according to the group priority of the at least one UE in a group to which the registered UEs belong and/or the UE priority.

In some embodiments, the method further includes:
accepting the deregistration of the UE and removing an association between the UE identifier of the deregistered UE and the corresponding group identifier.

In some embodiments, the first core network function may determine a numerical count of registered UEs associated with the group identifier and determine whether the deregistered UE is the last UE of the group identifier.

If the numerical count of registered UEs associated with the group identifier is zero, it is determined that the deregistered UE is the last UE of the group identifier; if the numerical count of registered UEs associated with the group identifier is greater than zero, it is determined that the deregistered UE is not the last UE of the group identifier.

S2205, the first core network function determines that the deregistered UE is the last UE of the group identifier, and removes the group identifier from the first list.

In some embodiments, the first list includes: group identifiers associated with registered UEs.

If the deregistered UE is the last UE of the group identifier, that is, multiple UEs associated with the group identifier have been deregistered, then the group identifier may be deleted from the first list.

S2206, a first response message is sent.

In some embodiments, the first core network function sends the first response message to the second core network function.

In some embodiments, implementations of step S2206 may be found in the implementations of step S2106 in Fig. 2A and other related parts in the embodiments involved in Fig. 2A, which will not be repeated here.

In some embodiments, the first response message indicates whether to accept or reject deregistering the UE.

S2207, a second response message is sent.

In some embodiments, the second core network function sends the second response message to the UE.

In some embodiments, implementations of step S2207 may be found in the implementations of step S2107 in Fig. 2A and other related parts in the embodiments involved in Fig. 2A, which will not be repeated here.

In some embodiments, the term "information" may be used interchangeably with terms such as "message", "signal", "signaling", "report", "configuration", "indication", "instruction", "command", "channel", "parameter", "field", "data", etc.

In some embodiments, the term "send" may be used interchangeably with terms such as "transmit", "report", "transmission", etc.

The method for UE registration disclosed in the embodiments may include at least one of steps S2201 to S2207. For example, step S2201 combined with steps S2203 to S2207 may be implemented as an independent embodiment, or step S2201 combined with step S2203 or steps S2206 to S2207 may be implemented as an independent embodiment, but is not limited thereto.

In some embodiments, step S2202 may be performed, and one or more of these steps may be omitted or substituted in different embodiments. It can be understood that the UE may carry the group identifier in the second request message, and thus the second core network function is not required to determine the group identifier of the UE requesting registration.

In some embodiments, steps S2204 and S2205 may be performed, and one or more of these steps may be omitted or substituted in different embodiments. It can be understood that when the first core network function performs UE deregistration, it may directly deregister all UEs associated with the group identifier and remove the group identifier from the first list; and there is no need to determine whether the deregistered UE is the last UE of the group identifier.

Fig. 3A is an interactive schematic diagram of a method for UE registration according to an embodiment of the present disclosure.

As shown in Fig. 3A, the present disclosure relates to a method for UE registration. The method is applicable to a first core network function, and the method includes:
S3101, a first request message is received, where the first request message is used to register a UE requesting registration with a network slice or to deregister the UE.

In some embodiments, the first request message includes a group identifier.

In some embodiments, the first request message does not include a group identifier.

In some embodiments, implementations of step S3101 may be found in the implementations of step S2103 in Fig. 2A and other related parts in the embodiments involved in Fig. 2A, which will not be repeated here.

In some embodiments, the first core network function receives the first request message sent by a second core network function.

In some embodiments, when the first request message does not include the group identifier, the method further includes:
determining the group identifier based on a first configuration and/or first information.

In some embodiments, the first configuration includes at least one of:
a local configuration; or
an OAM Configuration.

In some embodiments, the first information is provided by a PCF or an NEF.

In some embodiments, the first information includes a group identifier, i.e., the PCF or NEF sends the group identifier to the AFM.

In some embodiments, the first information sent by the PCF or NEF may be provided by a configuration obtained by the PCF or NEF.

In some embodiments, the PCF or NEF dynamically obtains the stored group identifier and then sends the group identifier to the second core network function, namely the AFM.

S3102, a target policy is determined based on the group identifier.

In some embodiments, implementations of step S3102 may be found in the implementations of step S2104 in Fig. 2A and other related parts in the embodiments involved in Fig. 2A, which will not be repeated here.

S3103, registering the UE requesting registration with the network slice is accepted or rejected according to the target policy.

In some embodiments, implementations of step S3103 may be found in the implementations of step S2105 in Fig. 2A and other related parts in the embodiments involved in Fig. 2A, which will not be repeated here.

S3104, a first response message is sent.

In some embodiments, implementations of step S3104 may be found in the implementations of step S2107 in Fig. 2A and other related parts in the embodiments involved in Fig. 2A, which will not be repeated here.

In some embodiments, the first core network function sends the first response message to the second core network function.

The method for UE registration in the embodiments of the present disclosure may include at least one of steps S3101 to S3104. For example, step S3101 combined with steps S3103 to S3104 may be implemented as an independent embodiment, but is not limited thereto.

In some embodiments, step S3102 may be performed, and one or more of these steps may be omitted or substituted in different embodiments. When performing admission control, the first core network function directly considers the group identifier, without determining the target policy.

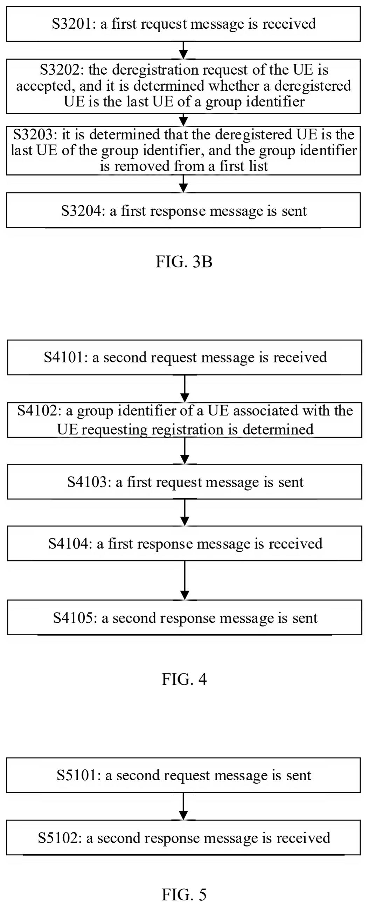

Fig. 3B is an interactive schematic diagram of a method for UE registration according to an embodiment of the present disclosure. As shown in Fig. 3B, the present disclosure relates to the method for UE registration applicable to a first core network function, and the method includes the following steps.

S3201, a first request message is received.

In some embodiments, the first request message includes a group identifier.

In some embodiments, the first request message does not include the group identifier.

In some embodiments, implementations of step S3201 may be found in the implementations of step S2203 in Fig. 2B and other related parts in the embodiments involved in Fig. 2B, which will not be repeated here.

In some embodiments, the first core network function receives the first request message sent by a second core network function.

S3202, the deregistration request of the UE is accepted, and it is determined whether a deregistered UE is the last UE of a group identifier.

In some embodiments, implementations of step S3202 may be found in the implementations of step S2204 in Fig. 2B and other related parts in the embodiments involved in Fig. 2B, which will not be repeated here.

S3203, it is determined that the deregistered UE is the last UE of the group identifier, and the group identifier is removed from a first list.

In some embodiments, implementations of step S3203 may be found in the implementations of step S2205 in Fig. 2B and other related parts in the embodiments involved in Fig. 2B, which will not be repeated here.

S3204, a first response message is sent.

In some embodiments, implementations of step S3204 may be found in the implementations of step S2206 in Fig. 2B and other related parts in the embodiments involved in Fig. 2B, which will not be repeated here.

In some embodiments, the first core network function sends the first response message to the second core network function.

The method for UE registration in the embodiments of the present disclosure may include at least one of steps S3201 to S3204. For example, step S3201 combined with steps S3203 to S3204 may be implemented as an independent embodiment, but is not limited thereto.

In some embodiments, steps S3202 and S3203 may be performed, and one or more of these steps may be omitted or substituted in different embodiments. It can be understood that when the first core network function performs the UE deregistration, it may directly deregister all UEs associated with the group identifier and remove the group identifier from the first list, and there is no need to determine whether the deregistered UE is the last UE of the group identifier.

Fig. 4 is a flowchart illustrating a method for UE registration according to an embodiment of the present disclosure. As shown in Fig. 4, an embodiment of the disclosure relates to a communication method performed by a second core network function. The method includes the following steps.

S4101, a second request message is received.

In some embodiments, implementations of step S4101 may be found in the implementations of step S2101 in Fig. 2A and other related parts in the embodiments involved in Fig. 2A, which will not be repeated here.

In some embodiments, implementations of step S4101 may be found in the implementations of step S2201 in Fig. 2B, and other related parts in the embodiments involved in Fig. 2B, which will not be repeated here.

In some embodiments, the second core network function receives the second request message sent by a UE.

In some embodiments, the second request message is used for registration of a UE requesting registration to a network slice.

S4102, a group identifier of a UE associated with the UE requesting registration is determined.

In some embodiments, implementations of step S4102 may be found in the implementations of step S2102 in Fig. 2A and other related parts in the embodiments involved in Fig. 2A, which will not be repeated here.

S4103, a first request message is sent, where the first request message includes a group identifier.

In some embodiments, implementations of step S4103 may be found in the implementations of step S2103 in Fig. 2A and other related parts in the embodiments involved in Fig. 2A, which will not be repeated here.

In some embodiments, the second core network function sends the first request message to the first core network function.

In some embodiments, the first request message includes an update flag, where the update flag is used to request adding or removing a UE registered with the network slice.

In some embodiments, the second request message requests registering the UE with the network slice, and the update flag requests adding the UE associated with the network slice.

In some embodiments, the second request message requests deregistering the UE, and the update flag requests removing the UE associated with the network slice.

S4104, a first response message is received.

In some embodiments, implementations of step S4104 may be found in the implementations of step S2106 in Fig. 2A and other related parts in the embodiments involved in Fig. 2A, which will not be repeated here.

In some embodiments, the second core network function receives the first response message sent by the first core network function.

S4105, a second response message is sent.

In some embodiments, implementations of step S4105 may be found in the implementations of step S2107 in Fig. 2A and other related parts in the embodiments involved in Fig. 2A, which will not be repeated here.

In some embodiments, the second core network function sends the second response message to the UE.

The method for UE registration in the embodiments of the present disclosure may include at least one of steps S4101 to S4105. For example, step S4101 combined with steps S4103 to S4105 may be implemented as an independent embodiment, but is not limited thereto.

In some embodiments, step S4102 may be performed, and one or more of these steps may be omitted or substituted in different embodiments. It can be understood that the UE may carry the group identifier in the second request message, and thus the second core network is not required to determine the group identifier of the requesting UE.

Fig. 5 is a flowchart illustrating a method for UE registration according to an embodiment of the present disclosure. As shown in Fig. 5, an embodiment of the present disclosure relates to a communication method performed by a UE. The method includes the following steps.

S5101, a second request message is sent.

In some embodiments, implementations of step S5101 may be found in the implementations of step S2101 in Fig. 2A and other related parts in the embodiments involved in Fig. 2A, which will not be repeated here.

In some embodiments, the UE sends the second request message to a second core network function.

S5102, a second response message is received.

In some embodiments, implementations of step S5102 may be found in the implementations of step S2107 in Fig. 2A and other related parts in the embodiments involved in Fig. 2A, which will not be repeated here.

In some embodiments, the UE receives the second response message sent by the second core network function.

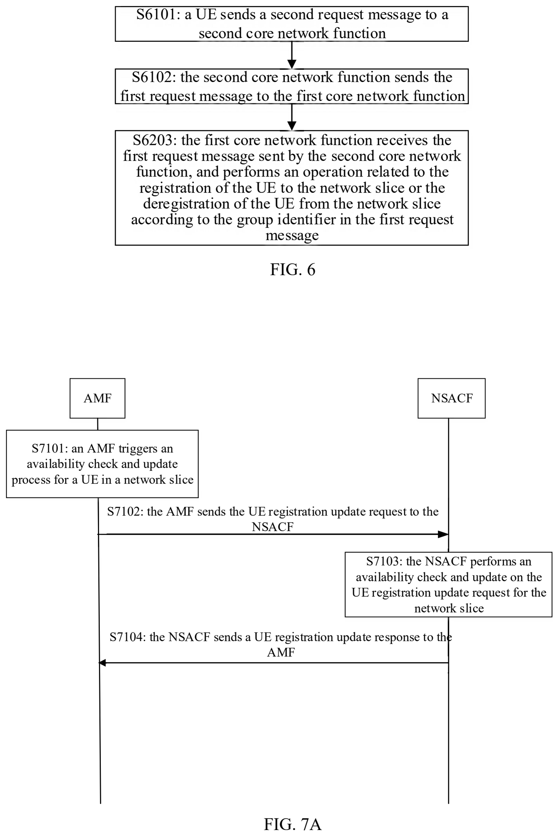

Fig. 6 is an interactive schematic diagram of a method for UE registration according to an embodiment of the present disclosure. As shown in Fig. 6, an embodiment of the disclosure relates to a method for UE registration performed by a communication system 100. The method includes one of the following steps.

S6101, a UE sends a second request message to a second core network function, where the second request message is used to trigger the second core network function to send a first request message including a group identifier to a first core network function, the group identifier indicates a group, the group involves at least one UE, and the first request message is related to a registration of the UE to a network slice or a deregistration of the UE from the network slice.

S6102, the second core network function sends the first request message to the first core network function.

S6203, the first core network function receives the first request message sent by the second core network function, and performs an operation related to the registration of the UE to the network slice or the deregistration of the UE from the network slice according to the group identifier in the first request message.

In some embodiments, the above methods may include the methods of the above-described communication system side, terminal side, access network device side, core network device side, etc., which will not be described in detail here.

In some embodiments, Fig. 7A is an interactive schematic diagram of a method for UE registration according to an embodiment of the present disclosure. As shown in Fig. 7A, the present disclosure relates to a method for UE registration, which includes the following steps.

S7101, an AMF triggers an availability check and update process for a UE in a network slice.

In some embodiments, the AMF may be the second core network function as described above.

In some embodiments, when a UE requests to register with a network slice, or when a UE requests to deregister, the AMF triggers a availability check and update process for the number of UEs in the network slice which is subject to NSAC.

In some embodiments, the AMF is unaware of a peer NSACF, and the AMF performs NSACF discovery and selection.

In some embodiments, if the AMF is unaware of the peer NSACF, the AMF performs NSACF discovery and selection. When a Single Network Slice Selection Assistance Information (S-NSSAI) needs to perform NSAC, and the network slice identifier is in an Allowed NSSAI (e.g., the AMF requests registering the UE with the network slice), or is deleted from the Allowed NSSAI (the AMF requests deregistering the UE from the network slice), the AMF triggers the network slice availability check and update process to update the number of registered terminal users.

The trigger event of the process also includes a change of the Allowed NSSAI in case of inter-AMF mobility. The process is triggered in the following cases:

At a UE registration process, including a registration of mobility registration update type caused by an initial registration or inter-AMF mobility, the NSAC is executed before or after a registration acceptance message depending on whether Early Availability Check (EAC) mode is enabled (for example, if the EAC is activated, the NSAC process is executed before the registration acceptance message; if the EAC is not activated, the NSAC process is executed after the registration acceptance message).

In some embodiments, at a deregistration process, after the deregistration process is completed, the NSAC process is executed to remove the UE from the statistics.

In some embodiments, at a UE configuration update process, such as an NSSAA network slice-specific authentication process or a subscribed S-NSSAI change process triggering a configuration update, the NSAC is executed before or after the configuration update message depending on an EAC mode (for example, if the EAC mode is activated and the update flag is to increase in number, the NSAC is executed before the UE configuration update message; if the EAC mode is activated and the update flag is to decrease in number, or if the EAC mode is not activated, the NSAC is executed after the UE configuration update message).

S7102: the AMF sends the UE registration update request to the NSACF.

In some embodiments, the NSACF corresponds to the first core network function of the present disclosure.

In some embodiments, the UE registration update request carries a group ID, and the group ID is used to identify an XR service group or an application group to which the UE belongs.

In some embodiments, the group ID may be an internal group identifier or a standardized universal group identifier.

In some embodiments, the group ID is determined by the AMF.

In some embodiments, the AMF may determine the group ID based on a local configuration, an OAM configuration, UDM subscription information, an XR multimodal service capability sent by the UE or group information related to UE PEI, or group information in a UE context sent by the AMF.

In some embodiments, the UE registration update request also carries a UE ID, an access type authorized by NSSAI, a network slice identifier or identifier list S-NSSAI(s) subject to NSAC, an AFM identifier, and an update flag.

In some embodiments, the update flag includes: increase, decrease, or update.

For example, when the UE requests to register with the network slice, the update flag is to increase.

For example, when the UE requests to deregister, the update flag is to reduce.

For example, when the UE's access type is update, the update flag is to update.

Furthermore, the AMF may determine the group ID based on the local configuration, the OAM configuration, the UDM subscription information, the group information related to the XR multimodal service capability/the UE PEI sent by the UE, or the group information in the UE context sent by other AMFs.

In some embodiments, for the network slice, if this is a first interaction between the AMF and the NSACF, the NSAC process is executed, and the AMF carries relevant endpoint NF information for EAC Notification in a message, thereby implicitly subscribing the EAC notification for the S-NSSAI from the NSACF.

S7103, the NSACF performs an availability check and update on the UE registration update request for the network slice.

In some embodiments, the NSACF updates, based on the group ID, the number of UEs established in the network slice indicated by the S-NSSAI.

In some embodiments, the NSACF applies the same NSAC policy to all UEs with the group ID, that is, accepts or rejects registering all UEs of the group ID with the network slice.

In some embodiments, the NSACF performs a UE NASC function associated with the group ID according to an NSAC policy priority instruction, that is, performs availability check on the number of all UEs in the network slice associated with the group ID according to a group policy priority.

In some embodiments, the update flag is to increase, and the maximum number of UEs established on the network slice indicated by the S-NSSAI is reached, it is determined whether the group ID is in an active list. If the group ID is in the active list, the NSACF stores the UE identifier, associates the UE identifier with the group ID, and increases or does not increase the number of UEs in the network slice indicated by S-NSSAI according to the group policy.

In some embodiments, the maximum number of UEs established on the network slice corresponds to the numerical count of UEs allowed to be registered with the network slice of the present disclosure.

In some embodiments, the activation list corresponds to the first list of the present disclosure.

In some embodiments, the update flag is to increase, and the maximum number of UEs established on the network slice indicated by the S-NSSAI is reached. If the group ID is not in the active list, the number of activated groups remains unchanged, the group ID is not added into activated group IDs, and the registration request of the UE is rejected.

In some embodiments, if the update flag is to increase and the maximum number of UEs established on the network slice indicated by the S-NSSAI is not reached, it is determined whether the group ID is in the active list. If the group ID is in the active list, the UE identifier is associated with the group ID. If the group ID is not in the active list, the group ID is added into the active list and the UE identifier is associated with the group ID.

It should be noted that if the UE associated with the group ID is already in the active list, the registration request of the UE will be accepted, and the number of UEs corresponding to the group ID will be increased.

In some embodiments, the update flag is to increase, and the maximum number of UEs established on the network slice indicated by the S-NSSAI is reached. If the group ID is not in the active list and the maximum number of UEs on the network slice indicated by S-NSSAI is not reached, the number of activated groups remains unchanged, and the group ID is not added into activated group IDs.

It should be noted that the NSACF accepts the registration request from the UE to register with the network slice, the UE ID is associated with the group ID, and the number of activated UEs in the network slice is increased.

In some embodiments, the NSACF is configured with a group threshold, and NSACF performs a group availability check.

In some embodiments, the group threshold corresponds to the numerical count of groups allowed by the network slice in the present disclosure.

In some embodiments, the update flag is to increase, the NSACF is configured with the group threshold, and the group threshold of the network slice indicated by the S-NSSAI is not reached. If the group ID is already in the active list, a UE ID is added into UE IDs associated with the Group ID, and the number of registered groups of the network slice remains unchanged. If the group ID is not in the active list, the group ID is added into the active list, and the number of registered groups of the network slice increases.

It should be noted that NSACF accepts registering the UE requesting registration with the network slice, the UE ID is associated with the group ID, and increases the number of registered UEs in the network slice.

In some embodiments, the update flag is to increase, the NSACF is configured with the group threshold, and the group threshold of the network slice indicated by the S-NSSAI is reached. If the group ID is already in the active list, the new UE ID is added into UE IDs associated with the group ID, and the number of activated groups of the network slice remains unchanged.

It should be noted that the NSACF accepts registering the UE requesting registration with the network slice, and the UE ID is associated with the group ID.

In some embodiments, the update flag is to increase. If the group ID is not in the active list and the maximum number of UEs in the network slice indicated by the S-NSSAI is not reached, the number of active groups remains unchanged, and the group ID is not added into active group IDs.

It should be noted that NSACF accepts registering the UE requesting registration with the network slice, the UE ID is associated with the group ID, and the number of UEs registered with the network slice is increased.

In some embodiments, the update flag is to increase. If the group ID is not in the active list and the maximum number of UEs in the network slice indicated by the S-NSSAI is reached, the number of activated groups remains unchanged, the group ID is not added into activated group IDs, and the UE requesting registration is rejected from registering to the network slice.

In some embodiments, if the UE associated with the group ID is related to a plurality of service areas, the maximum number of UEs for the plurality of service areas shall be used for the process.

It should be noted that if the number of UEs in some service areas reaches the maximum number of UEs, while the number of UEs in other service areas does not reach the maximum number of UEs, the NSAC group policy will be applied. For example, if the maximum number of UEs in at least one of the service areas related to the UE associated with the group ID is not reached, then the request of respective UE associated with the group ID to register with the network slice is accepted.

In some embodiments, if the update flag is to reduce, then the number of UEs in the network slice is reduced, and the UE ID is removed from UE IDs associated with the group ID; and if the UE is the last UE in the group, the group ID is removed from the active list.

In some embodiments, the NSACF determines whether an access type provided by the AMF is configured with an NSAC function. If not configured, the NSACF accepts the request without changing the number of UEs. If the NSACF function is configured, the NSACF will perform an update of the number of UEs registered with the slice. For example, based on the information provided by the AMF in updated flag parameters, the number of registered UEs in the corresponding network slice is increased or decreased.

The NSACF considers the group ID to perform an update on the number of UEs registered with the network slice.

Furthermore, the same NSAC policy is applied to all UEs with the group ID, either accepting or rejecting the UE registration. Alternatively, the NSAC function of the UE associated with the group ID may be executed according to the NSAC policy priority, that is, the availability check (i.e., admission control) of the corresponding slice of the UE in the group ID may be performed according to the priority of the group policy.

Furthermore, if the UE is already in the registration list for the group ID, then the UE requesting registration is accepted; that is, the UE is added into the registration list, and the number of registered UEs in the slice is increased.

Furthermore, if the NSACF has the group threshold or configured limit, the group availability check is performed.

If the NSACF is configured with the group threshold or configured limit, and the maximum group threshold or configured limit in the network slice has not been reached. If the group ID is already in the registered list, a new entry is added into the group ID, and the number of registered groups remains unchanged; and if the group ID is not in the registered list, the group ID is added to the registered list, and the number of registered groups increases. Furthermore, the UE registration request is accepted, and the UE is added into the registered list, and the number of UEs registered with the slice is increased.

If the NSACF is configured with the group threshold or configured limit, and the maximum Group threshold or configured limit in the network slice has been reached. If the Group ID is already in the registered list, a new entry is added to the group ID, and the number of registered groups remains unchanged. Furthermore, the UE registration request is accepted, the UE is added into the registered list, and the number of UEs registered with the slice is increased.

If the group ID is not in the registration list and the maximum number of registered users in the slice (or the area where the slice is located) has not been reached, the number of registered groups remains unchanged, and the group ID is not added to the registered groups; the UE registration request is accepted, the UE is added into the registered list, and the number of UEs registered with the slice is increased.

If the group ID is not in the registration list, and the maximum number of registered users in the slice (or the area where the slice is located) has been reached, the number of registered groups remains unchanged, and the group ID is not added to the registered groups; at the same time, the UE requesting registration is rejected.

If the update flag is to decrease, the number of registered UEs is reduced accordingly. If the UE is the last UE in the group, the group ID is removed from the group list.

In an implementation, if the UEs in the group ID access the network through different access types, the NSAC policy for the group is executed according to a maximum number of registered UEs for a corresponding access type.

In an implementation, if the UE in the group ID is related to the plurality of service areas, the maximum number of service areas is used. Furthermore, if UEs in some of the service areas reach the maximum value while others do not, the NSAC's group policy will be applied. For example, if some service areas in the group do not reach the maximum value, then all UE registration requests in the group will be accepted.

In some embodiments, if an EAC notification endpoint is received from the AMF, the NSACF stores the EAC notification endpoint associated with S-NSSAI to facilitate subsequent use of the stored notification endpoint to update the EAC mode.

S7104, the NSACF sends a UE registration update response to the AMF.

In some embodiments, the UE registration update response indicates whether to accept or reject registering the UE requesting registration with the network slice.

In some embodiments, the UE registration update response carries a result indication, which includes a rejection cause.

For example, the rejection cause may be set to the maximum numerical count of UEs allowed by the network slice.

In some embodiments, the result indication may include a restricted access type.

For example, when a UE requests registration to register with the network slice, the NSACF sends the UE registration update response carrying the result indication to the AMF, the result indication may be that the maximum allowed number of UEs has been reached, or the maximum allowed number of UEs has not been reached, and the restricted access type.

In some embodiments, according to the restricted access type, the AMF restricts a UE of the restricted access type that requests registration from registering with the network slice.

In some embodiments, the UE number update response indicates that the UE requesting registration is rejected from registering with the network slice. The SM may set a back-off timer and send the back-off timer to the UE.

In some embodiments, the UE of the restricted access type receives the back-off timer and registers with the network slice before the back-off timer expires.

In some embodiments, the NSACF returns a Nnsacf_NSAC_NumOfUEsUpdate_Response message to the AMF, which carries slice identifier S-NSSAI(s) and a result indication indicating whether the slice has reached the maximum number of registered users. In an implementation, the result indication may include whether the slice has reached the maximum number of registered groups.

At the UE registration process, if only some of the S-NSSAIs reached the maximum number of UEs per S-NSSAI, the AMF sends a registration acceptance message to the UE in which the AMF includes the rejected S-NSSAI(s) in the rejected NSSAI list for which the NSACF has indicated that the maximum number of UEs per network slice has been reached, and for each rejected S-NSSAI the AMF includes a corresponding rejection cause set to maximum number of UEs per network slice reached. In an implementation, a timer may be set to initiate a re-request.

When for all the requested S-NSSAI(s) provided in the request message sent by the AMF to the NSACF, the allowed maximum number has been reached and if one or more subscribed S-NSSAIs are marked as default in the subscription information and not subject to NSAC, the AMF may determine to include these default subscribed S-NSSAIs in the Allowed NSSAI as the authorized allowed slices. Otherwise, the AMF rejects the registration request of the UE. In the registration rejection message, the AMF includes the rejected S-NSSAI(s) in the rejected NSSAI parameter and for each rejected S-NSSAI the AMF includes a corresponding reject cause to indicate that the allowed maximum number of UEs per network slice has been reached. In an implementation, a timer may be set to initiate a re-request.

If the rejection is due to the group threshold or configured limit being reached, the rejection cause indicates that the maximum group threshold or configured limit has been reached.

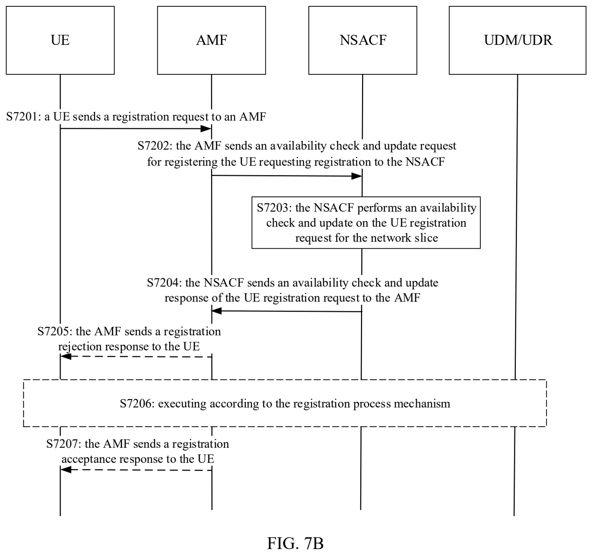

Fig. 7B is an interactive schematic diagram of a method for UE registration according to an embodiment of the present disclosure. As shown in Fig. 7B, the present disclosure relates to a method for UE registration. The method includes the following steps.

S7201, a UE sends a registration request to an AMF.

In some embodiments, the registration request carries a UE ID, a group identifier, and/or a network slice identifier.

In some embodiments, the AMF performs NSACF discovery and selection based on parameters such as the network slice identifier and NSACF characteristics.

S7202, the AMF sends an availability check and update request for registering the UE requesting registration to the NSACF.

In some embodiments, the availability check and update request for registering the UE with the network slice (Nnsacf_NSAC_NumOfUEsUpdate_Request) carries the UE ID and/or the network slice identifier.

For implementations of S7202, reference may be made to the implementations of S2103 in Fig. 2A and other related parts in the embodiments involved in Fig. 2A, which will not be repeated here.

S7203, the NSACF performs an availability check and update on the UE registration request for the network slice.

In some embodiments, for implementations of S7203, reference may be made to the implementations of S7103 in Fig. 7A and other related parts in the embodiments involved in Fig. 7A, which will not be repeated here.

S7204, the NSACF sends an availability check and update response of the UE registration request to the AMF.

In some embodiments, for implementations of S7204, reference may be made to the implementations of S7104 in Fig. 7A and other related parts in the embodiments involved in Fig. 7A, which will not be repeated here.

S7205, the AMF sends a registration rejection response to the UE based on the availability check and update response of the UE registration request.

If all slices requested to perform NSAC have reached their maximum value (reaching the maximum value within the PLMN or service area, and there are no new thresholds to update or supplement within the slice or the registration area of the slice), and according to an AMF configuration and other policy information, such as no other authorized default slices or slices in the NSSAA slice-specific authentication process, then the AMF will reject the UE's registration to the relevant network slice, sending the registration rejection message carrying a relevant rejection cause value, such as the threshold reached, etc.

S7206, executing according to the registration process mechanism, reference may be made to the registration embodiments in the above embodiments.

S7207, the AMF sends a registration acceptance response to the UE.

The AMF sends the registration acceptance message to the UE, which carries the rejected slice identifier and the corresponding cause value, and may also carry a back-off timer.

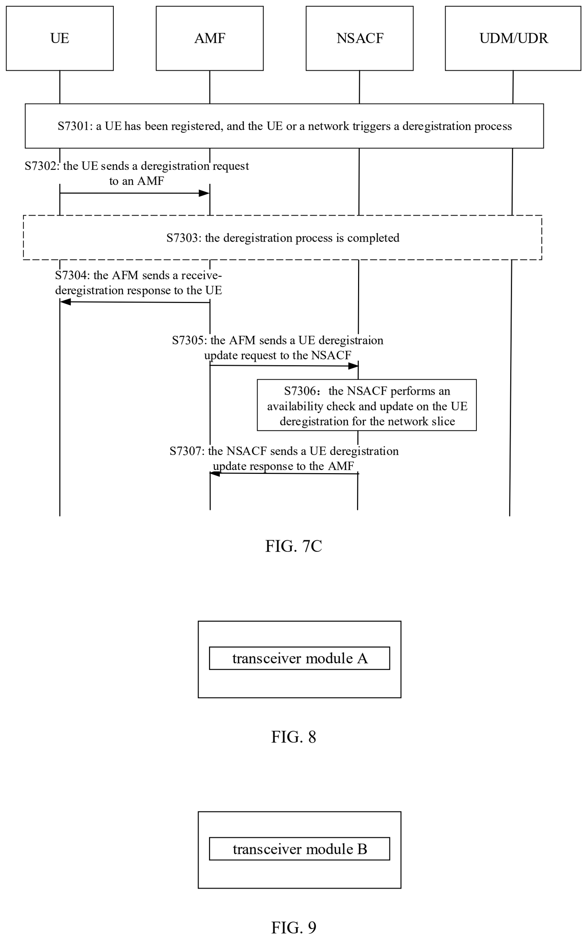

Fig. 7C is an interactive schematic diagram of a method for UE registration according to an embodiment of the present disclosure. As shown in Fig. 7C, the present disclosure relates to a method for UE registration. The method includes the following steps.

S7301, a UE has been registered, and the UE or a network triggers a deregistration process.

S7302, the UE sends a deregistration request to an AMF.

In some embodiments, the deregistration request carries a UE ID and a network slice identifier.

S7303, the deregistration process is completed.

S7304, the AFM sends a receive-deregistration response to the UE.

For S7305, S7306 and S7307, reference may be made to Fig. 7A.

After the deregistration process is completed, the AMF triggers the availability check and update process for the number of users registered with the slice. For example, the NSACF subtracts the number of UEs from the statistics within the PLMN or service area of each corresponding slice, and deletes the UE ID from the list of users registered with the corresponding slice.

The present disclosure also provides an apparatus for implementing any of the above methods. For example, an apparatus is provided that includes units or modules for implementing the steps performed by the terminal in any of the above methods. Alternatively, another apparatus is provided, the apparatus includes a unit or module for implementing the steps performed by the network device (e.g., access network device, or core network device) in any of the above methods.

It should be understood that the division of the units or modules in the above device is only a logical functional division. In actual implementation, they can be fully or partially integrated into a physical entity, or they can be physically separated. Furthermore, the units or modules in the device may be implemented in the form of processor calling software: for example, the device includes a processor, the processor is connected to a memory, the memory stores instructions, and the processor calls the instructions stored in the memory to implement any of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules can be achieved through the design of the hardware circuits. The aforementioned hardware circuits can be understood as one or more processors. For example, in one implementation, the aforementioned hardware circuit is an application-specific integrated circuit (ASIC). The functions of some or all of the aforementioned units or modules are achieved through the design of the logical relationships between the components within the circuit. As another example, in another implementation, the aforementioned hardware circuit may be implemented through a programmable logic device (PLD). Taking a field-programmable gate array (FPGA) as an example, it can include a large number of logic gates. The connection relationships between the logic gates are configured through configuration files, thereby achieving the functions of some or all of the aforementioned units or modules. All units or modules of the above devices may be implemented entirely through processor calling software, or entirely through hardware circuits, or partially through processor calling software with the remaining parts implemented through hardware circuits.

In embodiments of the present disclosure, the processor is a circuit with signal processing capabilities. In one implementation, the processor can be a circuit with instruction read and execute capabilities, such as a Central Processing Unit (CPU), a microprocessor, a graphics processing unit (GPU) (which can be understood as a type of microprocessor), or a digital signal processor (DSP). In another implementation, the processor can implement certain functions through the logical relationships of hardware circuits. The logical relationships of the aforementioned hardware circuits are fixed or reconfigurable. For example, the processor is a hardware circuit implemented by an application-specific integrated circuit (ASIC) or a programmable logic device (PLD), such as an FPGA. In reconfigurable hardware circuits, the process of the processor loading the configuration document and implementing the hardware circuit configuration can be understood as the process of the processor loading instructions to achieve the functions of some or all of the above units or modules. In addition, it may also be a hardware circuit designed for artificial intelligence, which can be understood as an ASIC, such as a Neural Network Processing Unit (NPU), a Tensor Processing Unit (TPU), a Deep Learning Processing Unit (DPU), etc.

Fig. 8 is a schematic diagram of a first core network device provided in an embodiment of the present disclosure. The first core network device includes:
a transceiver module A, configured to receive by a first core network function, a first request message sent by a second core network function, where the first request message is used to register a UE requesting registration with a network slice or to deregister the UE; and to perform an operation related to the registration of the UE to the network slice or the deregistration of the UE from the network slice according to a group identifier associated with the UE.

In an embodiment, the first request message includes the group identifier, and a group corresponding to the group identifier includes at least one UE.

In an embodiment, the transceiver module A is configured to determine the group identifier according to a first configuration and/or first information.

In an embodiment, the first configuration includes at least one of:
a local configuration, or an OAM configuration; and/or
the first piece of information is provided by a PCF or an NEF.

In an embodiment, the transceiver module A is further configured to: determine a target policy according to the group identifier; and accept or reject registering the UE requesting registration with the network slice according to the target policy.

In an embodiment, the transceiver module A is further configured to: in response the target policy being a first policy, rejecting or accepting registering any of the at least one UE in the group corresponding to the group identifier with the network slice; or in response to the target policy being a second policy, rejecting or accepting registering the at least one UE in the group corresponding to the group identifier with the network slice according to a priority associated with the at least one UE.

In an embodiment, the priority includes:
a group priority of the at least one UE; and/or
a UE priority.

In an embodiment, the transceiver module A is further configured to: accept or reject registering the UE requesting registration with the network slice according to the target policy and the group identifier.

In an embodiment, the first request message includes:
an update flag, where the update flag is used to request adding or removing a UE registered with the network slice.

In an embodiment, the transceiver module A is further configured to: in response to the update flag requesting adding a UE registered with the network slice, determine to accept or reject registering the UE requesting registration with the network slice, according to the numerical count of groups associated with the UEs registered with the network slice, a numerical count of groups allowed by the network slice, and the target policy; and/or
in response to the update flag requesting adding a UE registered with the network slice, determine to accept or reject registering the UE requesting registration with the network slice, according to the numerical count of UEs registered with the network slice, a numerical count of UEs allowed to be registered with the network slice, and the target policy.

In an embodiment, the transceiver module A is further configured to perform at least one of:
in response to the numerical count of UEs registered with the network slice being equal to or greater than the numerical count of UEs allowed to be registered with the network slice, and the target policy being the first policy, determining to reject registering the UE requesting registration with the network slice;
in response to the numerical count of UEs registered with the network slice being less than the numerical count of UEs allowed to be registered with the network slice, and the target policy being the first policy, determining to accept registering the UE requesting registration with the network slice;
in response to the numerical count of UEs registered with the network slice being equal to or greater than the numerical count of UEs allowed to be registered with the network slice, and the target policy being the second policy, determining to reject registering the UE requesting registration with the network slice;
in response to the numerical count of UEs registered with the network slice being less than the numerical count of UEs allowed to be registered with the network slice, the target policy being the second policy, and a numerical count of UEs to be registered being less than or equal to a numerical count of UEs acceptable to be registered with the network slice, determining to accept registering the UE requesting registration with the network slice; or
in response to the numerical count of UEs registered with the network slice being less than the numerical count of UEs allowed to be registered with the network slice, the target policy being the second policy, and a numerical count of UEs to be registered being greater than a numerical count of UEs acceptable to be registered with the network slice, determining to accept registering a part of the at least one UE requesting registration with the network slice and to reject registering another part of the at least one UE requesting registration with the network slice, according to the group priority of the at least one UE in a group associated with the at least one UE to be registered and/or the priority of the at least one UE,
where the numerical count of UEs acceptable to be registered with the network slice is a difference between the numerical count of UEs allowed to be registered with the network slice and the numerical count of UEs registered with the network slice.

In an embodiment, the transceiver module A is further configured to: in response to accepting registering the UE requesting registration with the network slice and the group identifier being not added into a first list, add the group identifier into the first list, where the first list includes group identifiers associated with the UEs registered with the network slice.

In an embodiment, the transceiver module A is further configured to: in response to the update flag requesting adding a UE associated with the network slice, determine to accept or reject registering the UE requesting registration with the network slice, according to the numerical count of groups associated with the UEs registered with the network slice, the numerical count of groups allowed by the network slice, the target policy, and whether the group identifier is added into a first list, where the first list includes group identifiers associated with the UEs registered with the network slice; and/or
in response to the update flag requesting adding a UE associated with the network slice, determine to accept or reject registering the UE requesting registration with the network slice, according to the numerical count of groups associated with the UEs registered with the network slice, the numerical count of groups allowed by the network slice, the target policy, and whether the numerical count of UEs registered with the network slice is equal to a numerical count of UEs allowed to be registered with the network slice.

In an embodiment, the transceiver module A is further configured to perform at least one of:
in response to the numerical count of groups associated with the UEs registered with the network slice being less than the numerical count of groups allowed by the network slice, the group identifier being not added into the first list, and the target policy being the first policy, determining to accept registering a UE associated with the same group identifier with the network slice;
in response to the numerical count of groups associated with the UEs registered with the network slice being equal to or greater than the numerical count of groups allowed by the network slice, the group identifier being not added into the first list, and the target policy being the first policy, determining to reject registering a UE associated with the same group identifier with the network slice;
in response to the numerical count of groups associated with the UEs registered with the network slice being less than the numerical count of groups allowed by the network slice, the group identifier being added into the first list, and the target policy being the first policy, determining to accept registering a UE associated with the same group identifier with the network slice;
in response to the numerical count of groups associated with the UEs registered with the network slice being equal to the numerical count of groups allowed by the network slice, the group identifier being added into the first list, and the target policy being the first policy, determining to accept registering a UE associated with the same group identifier with the network slice;
in response to the numerical count of groups associated with the UEs registered with the network slice being less than the numerical count of groups allowed by the network slice, the group identifier being not added into the first list, and the target policy being the second policy, adding a group identifier of a first priority into the first list, and determining to accept registering a UE of a group of the first priority with the network slice;
in response to the numerical count of groups associated with the UEs registered with the network slice being less than the numerical count of groups allowed by the network slice, the group identifier being not added into the first list, and the target policy being the second policy, adding a group identifier of a second priority into the first list, and determining to reject registering a UE of a group of the second priority with the network slice, where the second priority is lower than the first priority;
in response to the numerical count of groups associated with the UEs registered with the network slice being less than the numerical count of groups allowed by the network slice, the group identifier being added into the first list, and the target policy being the second policy, determining to accept registering the UE requesting registration with the network slice; or
in response to the numerical count of groups associated with the UEs registered with the network slice being equal to the numerical count of groups allowed by the network slice, the group identifier being added into the first list, and the target policy being the second policy, determining to accept or reject registering the UE requesting registration with the network slice according to a numerical count of UEs allowed to be registered with the network slice and a numerical count of UEs registered with the network slice.

In an embodiment, the transceiver module A is further configured to perform at least one of:
in response to the numerical count of groups associated with the UEs registered with the network slice being equal to the numerical count of groups allowed by the network slice, the group identifier being added into the first list, the target policy being the second policy, and a numerical count of UEs to be registered being less than or equal to a numerical count of UEs acceptable to be registered with the network slice, determining to accept registering the UE requesting registration with the network slice; or
in response to the numerical count of groups associated with the UEs registered with the network slice being equal to the numerical count of groups allowed by the network slice, the group identifier being added into the first list, the target policy being the second policy, and a numerical count of UEs to be registered being greater than a numerical count of UEs acceptable to be registered with the network slice, determining to accept registering a UE to be registered with a third priority with the network slice and to reject registering a UE to be registered with a fourth priority with the network slice, where the third priority is higher than the fourth priority,
where the numerical count of UEs acceptable to be registered with the network slice is a difference between the numerical count of UEs allowed to be registered with the network slice and the numerical count of UEs registered with the network slice.

In an embodiment, the transceiver module A is further configured to perform at least one of:
in response to the numerical count of groups associated with the UEs registered with the network slice being equal to or greater than the numerical count of groups allowed by the network slice, the group identifier being not added into a first list, and the numerical count of UEs registered with the network slice being equal to the numerical count of UEs allowed to be registered with the network slice, determining to reject registering the UE requesting registration with the network slice;
in response to the numerical count of groups associated with the UEs registered with the network slice being equal to or greater than the numerical count of groups allowed by the network slice, the group identifier being added into a first list, and the numerical count of UEs registered with the network slice being equal to the numerical count of UEs allowed to be registered with the network slice, determining to reject registering the UE requesting registration with the network slice;
in response to the numerical count of groups associated with the UEs registered with the network slice being less than the numerical count of groups allowed by the network slice, the group identifier being not added into a first list, and the numerical count of UEs registered with the network slice being less than the numerical count of UEs allowed to be registered with the network slice, adding the group identifier into the first list and determining to accept registering the UE requesting registration with the network slice;
in response to the numerical count of groups associated with the UEs registered with the network slice being less than the numerical count of groups allowed by the network slice, the group identifier being not added into a first list, the numerical count of UEs registered with the network slice being greater than the numerical count of UEs allowed to be registered with the network slice, and the target policy being the first policy, determining to reject registering a UE to be registered and of the same group with the network slice; or
in response to the numerical count of groups associated with the UEs registered with the network slice being less than the numerical count of groups allowed by the network slice, the group identifier being not added into a first list, the numerical count of UEs registered with the network slice being greater than the numerical count of UEs allowed to be registered with the network slice, and the target policy being the second policy, determining to accept registering a part of the at least one UE to be registered with the network slice and to reject registering another part of the at least one UE to be registered with the network slice according to the group priority of the at least one UE and/or the priority of the at least one UE,
where the first list includes group identifiers associated with the UEs registered with the network slice.

In an embodiment, the transceiver module A is further configured to perform at least one of:
in response to UEs of the group identifier being related to a plurality of service areas, and there existing at least one of the plurality of service areas in which a numeric count of UEs acceptable to be registered with a network slice is less than a numerical count of UEs to be registered and associated with the group identifier, determining to accept registering the UE requesting registration with the network slice; or
in response to UEs of the group identifier being related to a plurality of service areas, and there not existing any one of the plurality of service areas in which a numeric count of UEs acceptable to be registered with a network slice is less than a numerical count of UEs to be registered and associated with the group identifier, determining to reject registering the UE requesting registration with the network slice.

In an embodiment, the transceiver module A is further configured to:
in response to the update flag requesting removing a UE associated with the network slice, remove the UE.

In an embodiment, the transceiver module A is further configured to: register a last UE of a group identifier with the network slice, and remove the group identifier from the first list;
where the first list includes group identifiers of the UEs registered with the network slice.

In an embodiment, the first request message includes:
a UE registration request; and/or
a UE registration availability check and update request.

In an embodiment, the first request message carries access type information, and the access type information indicates an access type of the UE, where the access type is used to determine a numerical count of UEs allowed, for the corresponding access type, to be registered with the network slice.

In an embodiment, the transceiver module A is further configured to send a first response message to the second core network function, where the first response message indicates performing the operation related to the registration of the UE to the network slice or the deregistration of the UE from the network slice.

In an embodiment, the first core network function is an NSACF.

In an embodiment, the NSACF includes:
an NSACF in a single centralized architecture;
an NSACF within a service area related to the second core network function in a non-hierarchical multi-NSACF architecture; or
a local NSACF or a main NSACF within a hierarchical multi-NSACF architecture.

Fig. 9 is a schematic diagram of a second core network device provided in an embodiment of the present disclosure. The second core network device includes:
a transceiver module B, configured to send, by a second core network function, a first request message to a first core network function, where the first request message is related to a registration of a UE to a network slice or a deregistration of the UE from the network slice.

In an embodiment, the first request message includes a group identifier, the group identifier indicates a group, and the group are related to at least one UE.

In an embodiment, the transceiver module B is configured to determine a group identifier associated with a UE requesting registration with the network slice.

In an embodiment, the transceiver module B is configured to perform at least one of:
determining the group identifier associated with the UE requesting registration with the network slice based on a second configuration;
determining the group identifier associated with the UE requesting registration with the network slice based on subscription information of a UDM function;
determining the group identifier associated with the UE requesting registration with the network slice based on an XR multimodal service capability supported by the UE;
determining the group identifier associated with the UE requesting registration with the network slice based on a PEI of the UE; or
determining the group identifier associated with the UE requesting registration with the network slice based on group information of a UE context sent by an access and mobility management function (AMF).

In an embodiment, the second configuration includes a local configuration or a configuration of an OAM.

In an embodiment, the group identifier is used for the first core network function to determine a target policy, and the target policy is used to accept or reject registering the UE requesting registration with the network slice.

In an embodiment, the target policy includes at least one of:
a first policy used to reject or accept registering the UE associated with the group identifier with the network slice; or
a second policy used to accept registering at least one UE associated with the group identifier with the network slice according to the priority associated with the at least one UE.

In an embodiment, the priority includes a group priority of the at least one UE and/or a UE priority.

In an embodiment, the first request message is used to trigger the first core network function to determine, based on the target policy, to accept or reject registering the UE requesting registration with the network slice.

In an embodiment, the transceiver module B is configured to receive a second request message, and send by the second core network function the first request message.

In an embodiment, he first request message carries an update flag, and the update flag is used to request adding or removing a UE registered with the network slice.

In an embodiment, the first request message carries access type information, and the access type information indicates an access type of the UE, where the access type is used to determine a numerical count of UEs allowed, for the corresponding access type, to be registered with the network slice.

In an embodiment, the transceiver module B is configured to receive a first response message; and
accept or reject registering the UE requesting registration with the network slice based on the first response message.

In an embodiment, the first response message indicates accepting or rejecting registering the UE requesting registration with the network slice.

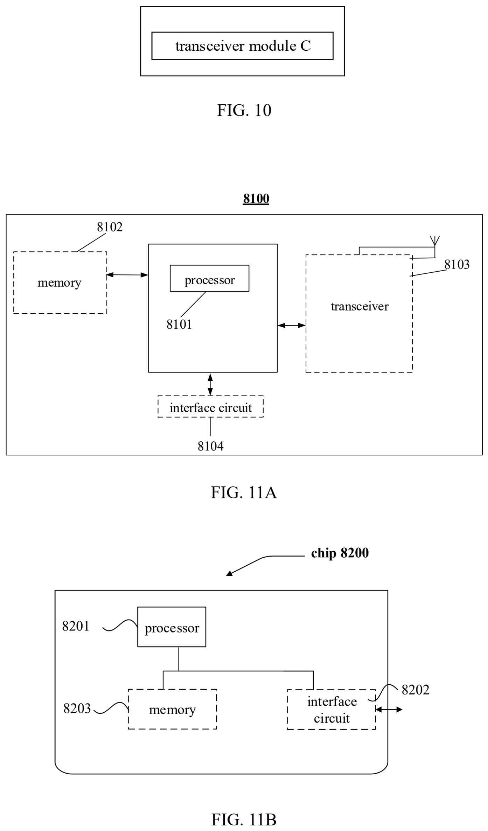

Fig. 10 is a schematic diagram of the structure of a UE provided in an embodiment of the present disclosure. The UE includes:
a transceiver module C, configured to send, by the UE, a second request message to a second core network function.

The second request message is used to trigger the second core network function to send a first request message to a first core network function, and the first request message is related to a registration of the UE to a network slice or a deregistration of the UE from the network slice.

In an embodiment, the first request message includes a group identifier, the group identifier indicates a group, and the group are related to at least one UE.

In an embodiment, the transceiver module C is configured to send group-related information of the UE to the second core network function, where the group-related information is used to determine the group identifier associated with the UE requesting registration to the network slice.

In an embodiment, the group-related information includes at least one of:
a group identifier;
an XR multimodal service capability supported by the UE; or
a PEI of the UE.

In an embodiment, the transceiver module C is configured to receive a second response message sent by the second core network function, where the second response message indicates accepting or rejecting registering the UE requesting registration with the network slice.

Fig. 11A is a schematic diagram of the structure of a communication device 8100 provided in an embodiment of the present disclosure. The communication device 8100 may be a network device (such as an access network device, a core network device, etc.), a terminal (such as a user equipment, etc.), a chip, chip system, or processor that supports the network device to implement any of the above methods, or a chip, chip system, or processor that supports the terminal to implement any of the above methods. The communication device 8100 may be used to implement the methods described in the above method embodiments, and for details, reference can be made to the description in the above method embodiments.

As shown in Fig. 11A, the communication device 8100 includes one or more processors 8101. The processor 8101 may be a general-purpose processor or a dedicated processor, such as a baseband processor or a central processing unit. The baseband processor may be configured to process the communication protocol and the communication data. The central processing unit may be configured to control the communication device (such as a base station, a baseband chip, a terminal, a terminal chip, a DU, a CU, or the like), execute a program, and process the data of the program. The processor 8101 is configured to call instructions so that the communication device 8100 executes any of the above methods.

In some embodiments, the communication device 8100 further includes one or more memories 8102 for storing instructions. For example, all or part of the memory 8102 may also be outside the communication device 8100.

In some embodiments, the communication device 8100 further includes one or more transceivers 8103. When the communication device 8100 includes one or more transceivers 8103, the communication steps such as sending and receiving in the above methods are executed by the transceiver 8103, and the other steps are executed by the processor 8101.

In some embodiments, the transceiver may include a receiver and a transmitter. The receiver and the transmitter may be separate or integrated. For example, the terms such as "transceiver" , "transceiver unit" , "transceiver machine" , "transceiver circuit" , or the like may be used interchangeably, the terms such as "transmitter" , "transmission unit" , "transmitter machine" , "transmission circuit" , or the like may be used interchangeably, and the terms such as "receiver" , "receiving unit" , "receiver machine" , "receiving circuit" , or the like may be used interchangeably.

For example, the communication device 8100 further includes one or more interface circuits 8104, which are connected to the memory 8102. The interface circuit 8104 may be configured to receive signals from the memory 8102 or other devices, and to send signals to the memory 8102 or other devices. For example, the interface circuit 8104 may read instructions stored in the memory 8102 and send the instructions to the processor 8101.

The communication device 8100 according to the embodiments may be a network device or a terminal, but the scope of the communication device 8100 according to the present disclosure is not limited thereto, and the structure of the communication device 8100 may not be limited by Fig. 11A. The communication device may be an independent device or may be part of a larger device. For example, the communication device may be: 1) an independent integrated circuit IC, a chip, a chip system, or subsystem; (2) a collection of one or more ICs, for example the collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, or the like; (6) others, etc.

Fig. 11B is a schematic diagram illustrating the structure of a chip 8200 according to an embodiment of the present disclosure. In a case where the communication device 8100 may be a chip or a chip system, reference may be made to the schematic diagram of the structure of the chip 8200 illustrated in Fig. 11B, but the present disclosure is not limited thereto.

The chip 8200 includes one or more processors 8201. The one or more processors 8201 are configured to invoke instructions to cause the chip 8200 to perform any of the above communication methods.

In some embodiments, the chip 8200 further includes one or more interface circuits 8202, which are connected to the memory 8203. The interface circuit 8202 may be configured to receive signals from the memory 8203 or other devices, and the interface circuit 8202 may be configured to send signals to the memory 8203 or other devices. For example, the interface circuit 8202 may read the instructions stored in the memory 8203 and send the instructions to the processor 8201. In an implementation, terms such as interface circuit, interface, transceiver pin, and transceiver can be used interchangeably

In some embodiments, the chip 8200 also includes one or more memories 8203 for storing instructions. For example, all or part of the memories 8203 may be outside the chip 8200.

The present disclosure also provides a storage medium, on which instructions are stored, and when the instructions are executed on the communication device 8100, the communication device 8100 performs any of the above methods. For example, the storage medium is an electronic storage medium. For example, the storage medium is a computer-readable storage medium, but is not limited thereto, and the storage medium may also be a storage medium readable by other devices. For example, the storage medium may be a non-transitory storage medium, but is not limited thereto, and the storage medium may also be a transitory storage medium.

The present disclosure also provides a program product that, when executed by the communication device 8100, causes the communication device 8100 to perform any of the above methods. For example, the program product is a computer program product.

The present disclosure also provides a computer program that, when executed on a computer, causes the computer to perform any one of the above methods.

Other embodiments of the present disclosure will readily occur to those skilled in the art upon consideration of the specification and practice of the invention disclosed herein. The present disclosure is intended to cover any variations, uses, or adaptations of the present disclosure that follow the general principles of the invention and include common knowledge or customary techniques in the art that are not disclosed herein. The description and examples are to be considered exemplary only, and the true scope and spirit of the present disclosure are indicated by the following claims.

It should be understood that the present invention is not limited to the precise structure described above and shown in the accompanying drawings, and various modifications and changes can be made without departing from the scope of the present disclosure. The scope of the present disclosure is limited only by the appended claims.

## Claims

1. A method for user equipment (UE) registration, comprising:
receiving, by a first core network function, a first request message sent by a second core network function, wherein the first request message is used to register a UE requesting registration with a network slice or to deregister the UE; and
performing an operation related to the registration of the UE to the network slice or the deregistration of the UE from the network slice according to a group identifier associated with the UE.

2. The method according to claim 1, wherein the first request message comprises the group identifier, and a group corresponding to the group identifier comprises at least one UE.

3. The method according to claim 1, further comprising:
determining the group identifier according to a first configuration and/or first information.

4. The method according to claim 3, wherein the first configuration comprises at least one of:
a local configuration, or an operation management system (OAM) configuration; and/or
the first information is provided by a policy control function (PCF) or a network openness function (NEF).

5. The method according to any one of claims 1 to 4, wherein performing the operation related to the registration of the UE to the network slice or the deregistration of the UE from the network slice according to the group identifier associated with the UE comprises:
determining a target policy according to the group identifier; and
accepting or rejecting registering the UE requesting registration with the network slice according to the target policy.

6. The method according to claim 5, wherein accepting or rejecting registering the UE requesting registration with the network slice according to the target policy comprises:
in response to the target policy being a first policy, rejecting or accepting registering any of the at least one UE in the group corresponding to the group identifier with the network slice; or
in response to the target policy being a second policy, rejecting or accepting registering the at least one UE in the group corresponding to the group identifier with the network slice according to a priority associated with the at least one UE.

7. The method according to claim 6, wherein the priority comprises:
a group priority of the at least one UE; and/or
a UE priority.

8. The method according to any one of claims 5 to 7, wherein accepting or rejecting registering the UE requesting registration with the network slice according to the target policy comprises:
accepting or rejecting registering the UE requesting registration with the network slice according to the target policy and a numerical count of groups associated with UEs registered with the network slice; and/or
accepting or rejecting registering the UE requesting registration with the network slice according to the target policy and a numerical count of UEs registered with the network slice.

9. The method according to any one of claims 1 to 8, wherein the first request message comprises:
an update flag, wherein the update flag is used to request adding or removing a UE registered with the network slice.

10. The method according to claim 9, wherein accepting or rejecting registering the UE requesting registration with the network slice according to the target policy and the numerical count of groups associated with the UEs registered with the network slice, comprises:
in response to the update flag requesting adding a UE registered with the network slice, determining to accept or reject registering the UE requesting registration with the network slice, according to the numerical count of groups associated with the UEs registered with the network slice, a numerical count of groups allowed by the network slice, and the target policy; and/or
accepting or rejecting registering the UE requesting registration with the network slice according to the target policy and the numerical count of UEs registered with the network slice comprises:
in response to the update flag requesting adding a UE registered with the network slice, determining to accept or reject registering the UE requesting registration with the network slice, according to the numerical count of UEs registered with the network slice, a numerical count of UEs allowed to be registered with the network slice, and the target policy.

11. The method according to claim 10, wherein in response to the update flag requesting adding a UE registered with the network slice, determining to accept or reject registering the UE requesting registration with the network slice according to the numerical count of UEs registered with the network slice, the numerical count of UEs allowed to be registered with the network slice and the target policy, comprises at least one of:
in response to the numerical count of UEs registered with the network slice being equal to or greater than the numerical count of UEs allowed to be registered with the network slice, and the target policy being the first policy, determining to reject registering the UE requesting registration with the network slice;
in response to the numerical count of UEs registered with the network slice being less than the numerical count of UEs allowed to be registered with the network slice, and the target policy being the first policy, determining to accept registering the UE requesting registration with the network slice;
in response to the numerical count of UEs registered with the network slice being equal to or greater than the numerical count of UEs allowed to be registered with the network slice, and the target policy being the second policy, determining to reject registering the UE requesting registration with the network slice;
in response to the numerical count of UEs registered with the network slice being less than the numerical count of UEs allowed to be registered with the network slice, the target policy being the second policy, and a numerical count of UEs to be registered being less than or equal to a numerical count of UEs acceptable to be registered with the network slice, determining to accept registering the UE requesting registration with the network slice; or
in response to the numerical count of UEs registered with the network slice being less than the numerical count of UEs allowed to be registered with the network slice, the target policy being the second policy, and a numerical count of UEs to be registered being greater than a numerical count of UEs acceptable to be registered with the network slice, determining to accept registering a part of the at least one UE requesting registration with the network slice and to reject registering another part of the at least one UE requesting registration with the network slice, according to the group priority of the at least one UE in a group associated with the at least one UE to be registered and/or the priority of the at least one UE,
wherein the numerical count of UEs acceptable to be registered with the network slice is a difference between the numerical count of UEs allowed to be registered with the network slice and the numerical count of UEs registered with the network slice.

12. The method according to claim 11, further comprising:
in response to accepting registering the UE requesting registration with the network slice and the group identifier being not added into a first list, adding the group identifier into the first list, wherein the first list comprises group identifiers associated with the UEs registered with the network slice.

13. The method according claim 10, wherein in response to the update flag requesting adding a UE registered with the network slice, determining to accept or reject registering the UE requesting registration with the network slice, according to the numerical count of groups associated with the UEs registered with the network slice, a numerical count of groups allowed by the network slice, and the target policy, comprises:
in response to the update flag requesting adding a UE associated with the network slice, determining to accept or reject registering the UE requesting registration with the network slice, according to the numerical count of groups associated with the UEs registered with the network slice, the numerical count of groups allowed by the network slice, the target policy, and whether the group identifier is added into a first list, wherein the first list comprises group identifiers associated with the UEs registered with the network slice; and/or
in response to the update flag requesting adding a UE associated with the network slice, determining to accept or reject registering the UE requesting registration with the network slice, according to the numerical count of groups associated with the UEs registered with the network slice, the numerical count of groups allowed by the network slice, the target policy, and whether the numerical count of UEs registered with the network slice is equal to a numerical count of UEs allowed to be registered with the network slice.

14. The method according to claim 13, wherein in response to the update flag requesting adding a UE associated with the network slice, determining to accept or reject registering the UE requesting registration with the network slice, according to the numerical count of groups associated with the UEs registered with the network slice, the numerical count of groups allowed by the network slice, the target policy and whether the group identifier is added into the first list, comprises at least one of:
in response to the numerical count of groups associated with the UEs registered with the network slice being less than the numerical count of groups allowed by the network slice, the group identifier being not added into the first list, and the target policy being the first policy, determining to accept registering a UE associated with the same group identifier with the network slice;
in response to the numerical count of groups associated with the UEs registered with the network slice being equal to or greater than the numerical count of groups allowed by the network slice, the group identifier being not added into the first list, and the target policy being the first policy, determining to reject registering a UE associated with the same group identifier with the network slice;
in response to the numerical count of groups associated with the UEs registered with the network slice being less than the numerical count of groups allowed by the network slice, the group identifier being added into the first list, and the target policy being the first policy, determining to accept registering a UE associated with the same group identifier with the network slice;
in response to the numerical count of groups associated with the UEs registered with the network slice being equal to the numerical count of groups allowed by the network slice, the group identifier being added into the first list, and the target policy being the first policy, determining to accept registering a UE associated with the same group identifier with the network slice;
in response to the numerical count of groups associated with the UEs registered with the network slice being less than the numerical count of groups allowed by the network slice, the group identifier being not added into the first list, and the target policy being the second policy, adding a group identifier of a first priority into the first list, and determining to accept registering a UE of a group of the first priority with the network slice;
in response to the numerical count of groups associated with the UEs registered with the network slice being less than the numerical count of groups allowed by the network slice, the group identifier being not added into the first list, and the target policy being the second policy, adding a group identifier of a second priority into the first list, and determining to reject registering a UE of a group of the second priority with the network slice, wherein the second priority is lower than the first priority;
in response to the numerical count of groups associated with the UEs registered with the network slice being less than the numerical count of groups allowed by the network slice, the group identifier being added into the first list, and the target policy being the second policy, determining to accept registering the UE requesting registration with the network slice; or
in response to the numerical count of groups associated with the UEs registered with the network slice being equal to the numerical count of groups allowed by the network slice, the group identifier being added into the first list, and the target policy being the second policy, determining to accept or reject registering the UE requesting registration with the network slice according to a numerical count of UEs allowed to be registered with the network slice and a numerical count of UEs registered with the network slice.

15. The method according to claim 14, wherein in response to the numerical count of groups associated with the UEs registered with the network slice being equal to the numerical count of groups allowed by the network slice, the group identifier being added into the first list, and the target policy being the second policy, determining to accept or reject registering the UE requesting registration with the network slice according to the numerical count of UEs allowed to be registered with the network slice and the numerical count of UEs registered with the network slice comprises at least one of:
in response to the numerical count of groups associated with the UEs registered with the network slice being equal to the numerical count of groups allowed by the network slice, the group identifier being added into the first list, the target policy being the second policy, and a numerical count of UEs to be registered being less than or equal to a numerical count of UEs acceptable to be registered with the network slice, determining to accept registering the UE requesting registration with the network slice; or
in response to the numerical count of groups associated with the UEs registered with the network slice being equal to the numerical count of groups allowed by the network slice, the group identifier being added into the first list, the target policy being the second policy, and a numerical count of UEs to be registered being greater than a numerical count of UEs acceptable to be registered with the network slice, determining to accept registering a UE to be registered with a third priority with the network slice and to reject registering a UE to be registered with a fourth priority with the network slice, wherein the third priority is higher than the fourth priority,
wherein the numerical count of UEs acceptable to be registered with the network slice is a difference between the numerical count of UEs allowed to be registered with the network slice and the numerical count of UEs registered with the network slice.

16. The method according to claim 13, wherein in response to the update flag requesting adding a UE associated with the network slice, determining to accept or reject registering the UE requesting registration with the network slice, according to the numerical count of groups associated with the UEs registered with the network slice, the numerical count of groups allowed by the network slice, the target policy, and whether the numerical count of UEs registered with the network slice is equal to the numerical count of UEs allowed to be registered with the network slice, comprises at least one of:
in response to the numerical count of groups associated with the UEs registered with the network slice being equal to or greater than the numerical count of groups allowed by the network slice, the group identifier being not added into a first list, and the numerical count of UEs registered with the network slice being equal to the numerical count of UEs allowed to be registered with the network slice, determining to reject registering the UE requesting registration with the network slice;
in response to the numerical count of groups associated with the UEs registered with the network slice being equal to or greater than the numerical count of groups allowed by the network slice, the group identifier being added into a first list, and the numerical count of UEs registered with the network slice being equal to the numerical count of UEs allowed to be registered with the network slice, determining to reject registering the UE requesting registration with the network slice;
in response to the numerical count of groups associated with the UEs registered with the network slice being less than the numerical count of groups allowed by the network slice, the group identifier being not added into a first list, and the numerical count of UEs registered with the network slice being less than the numerical count of UEs allowed to be registered with the network slice, adding the group identifier into the first list and determining to accept registering the UE requesting registration with the network slice;
in response to the numerical count of groups associated with the UEs registered with the network slice being less than the numerical count of groups allowed by the network slice, the group identifier being not added into a first list, the numerical count of UEs registered with the network slice being greater than the numerical count of UEs allowed to be registered with the network slice, and the target policy being the first policy, determining to reject registering a UE to be registered and of the same group with the network slice; or
in response to the numerical count of groups associated with the UEs registered with the network slice being less than the numerical count of groups allowed by the network slice, the group identifier being not added into a first list, the numerical count of UEs registered with the network slice being greater than the numerical count of UEs allowed to be registered with the network slice, and the target policy being the second policy, determining to accept registering a part of the at least one UE to be registered with the network slice and to reject registering another part of the at least one UE to be registered with the network slice according to the group priority of the at least one UE and/or the priority of the at least one UE,
wherein the first list comprises group identifiers associated with the UEs registered with the network slice.

17. The method according to claim 1, wherein performing the operation related to the registration of the UE to the network slice or the deregistration of the UE from the network slice according to the group identifier associated with the UE, comprises at least one of:
in response to UEs of the group identifier being related to a plurality of service areas, and there existing at least one of the plurality of service areas in which a numeric count of UEs acceptable to be registered with a network slice is less than a numerical count of UEs to be registered and associated with the group identifier, determining to accept registering the UE requesting registration with the network slice; or
in response to UEs of the group identifier being related to a plurality of service areas, and there not existing any one of the plurality of service areas in which a numeric count of UEs acceptable to be registered with a network slice is less than a numerical count of UEs to be registered and associated with the group identifier, determining to reject registering the UE requesting registration with the network slice.

18. The method according to claim 9, wherein performing the operation related to the registration of the UE to the network slice or the deregistration of the UE from the network slice according to the group identifier associated with the UE comprises:
in response to the update flag requesting removing a UE associated with the network slice, removing the UE.

19. The method according to any one of claims 1 to 18, further comprising:
registering a last UE of a group identifier with the network slice, and removing the group identifier from the first list,
wherein the first list comprises group identifiers of the UEs registered with the network slice.

20. The method according to any one of claims 1 to 19, wherein the first request message comprises:
a UE registration request; and/or
a UE registration availability check and update request.

21. The method according to any one of claims 1 to 20, wherein the first request message carries access type information, and the access type information indicates an access type of the UE, wherein the access type is used to determine a numerical count of UEs allowed, for the corresponding access type, to be registered with the network slice.

22. The method according to any one of claims 1 to 21, further comprising:
sending a first response message to the second core network function, wherein the first response message indicates performing the operation related to the registration of the UE to the network slice or the deregistration of the UE from the network slice.

23. The method according to any one of claims 1 to 22, wherein the first core network function is a network slice admission control function (NSACF).

24. The method according to claim 23, wherein the NSACF comprises:
an NSACF in a single centralized architecture;
an NSACF within a service area related to the second core network function in a non-hierarchical multi-NSACF architecture; or
a local NSACF or a main NSACF within a hierarchical multi-NSACF architecture.

25. A method for user equipment (UE) registration, comprising:
sending, by a second core network function, a first request message to a first core network function, wherein the first request message is related to a registration of a UE to a network slice or a deregistration of the UE from the network slice.

26. The method according to claim 25, wherein the first request message comprises a group identifier, the group identifier indicates a group, and the group are related to at least one UE.

27. The method according to claim 25 or 26, further comprising:
determining a group identifier associated with a UE requesting registration with the network slice.

28. The method according to claim 27, wherein determining the group identifier associated with the UE requesting registration with the network slice comprises at least one of:
determining the group identifier associated with the UE requesting registration with the network slice based on a second configuration;
determining the group identifier associated with the UE requesting registration with the network slice based on subscription information of a unified data management (UDM) function;
determining the group identifier associated with the UE requesting registration with the network slice based on an extended reality (XR) multimodal service capability supported by the UE;
determining the group identifier associated with the UE requesting registration with the network slice based on a permanent device identifier (PEI) of the UE; or
determining the group identifier associated with the UE requesting registration with the network slice based on group information of a UE context sent by an access and mobility management function (AMF).

29. The method according to claim 28, wherein the second configuration comprises: a local configuration or a configuration of an operation and maintenance management system (OAM).

30. The method according to any one of claims 25 to 29, wherein the group identifier is used for the first core network function to determine a target policy, and the target policy is used to accept or reject registering the UE requesting registration with the network slice.

31. The method according to claim 30, wherein the target policy comprises at least one of:
a first policy used to reject or accept registering the UE associated with the group identifier with the network slice;
a second policy used to accept registering at least one UE associated with the group identifier with the network slice according to the priority associated with the at least one UE.

32. The method according to claim 31, wherein the priority comprises a group priority of the at least one UE and/or a UE priority.

33. The method according to any one of claims 25 to 32, wherein the first request message is used to trigger the first core network function to determine, based on the target policy, to accept or reject registering the UE requesting registration with the network slice.

34. The method according to any one of claims 25 to 33, wherein sending by the second core network function the first request message to the first core network function comprises:
receiving a second request message, and sending by the second core network function the first request message.

35. The method according to any one of claims 25 to 34, wherein the first request message carries an update flag, and the update flag is used to request adding or removing a UE registered with the network slice.

36. The method according to any one of claims 25 to 35, wherein the first request message carries access type information, and the access type information indicates an access type of the UE, wherein the access type is used to determine a numerical count of UEs allowed, for the corresponding access type, to be registered with the network slice.

37. The method according to any one of claims 25 to 36, further comprising:
receiving a first response message; and
accepting or rejecting registering the UE requesting registration with the network slice based on the first response message.

38. The method of claim 37, wherein the first response message indicates accepting or rejecting registering the UE requesting registration with the network slice.

39. A method for user equipment (UE) registration, comprising:
sending, by a UE, a second request message to a second core network function,
wherein the second request message is used to trigger the second core network function to send a first request message to a first core network function, and the first request message is related to a registration of the UE to a network slice or a deregistration of the UE from the network slice.

40. The method of claim 39, wherein the first request message comprises a group identifier, the group identifier indicates a group, and the group are related to at least one UE.

41. The method according to claim 39 or 40, further comprising: sending group-related information of the UE to the second core network function, wherein the group-related information is used to determine the group identifier associated with the UE requesting registration to the network slice.

42. The method of claim 40, wherein the group-related information comprises at least one of:
a group identifier;
an extended reality (XR) multimodal service capability supported by the UE; or
a permanent device identifier (PEI) of the UE.

43. The method according to any one of claims 39 to 42, further comprising:
receiving a second response message sent by the second core network function, wherein the second response message indicates accepting or rejecting registering the UE requesting registration with the network slice.

44. A method for user equipment (UE) registration, comprising:
sending, by a UE, a second request message to a second core network function, wherein the second request message is used to trigger the second core network function to send a first request message to a first core network function, and the first request message is related to a registration of the UE to a network slice or a deregistration of the UE from the network slice;
sending, by the second core network function, the first request message to the first core network function; and
receiving, by the first core network function, the first request message sent by the second core network function, and performing an operation related to the registration of the UE to the network slice or the deregistration of the UE from the network slice according to a group identifier in the first request message.

45. A first core network device, comprising:
a transceiver module, configured to receive, by the first core network function, a first request message sent by a second core network function, wherein the first request message is used to register a user equipment (UE) requesting registration with a network slice or to deregister the UE; and to perform an operation related to the registration of the UE to the network slice or the deregistration of the UE from the network slice according to a group identifier associated with the UE.

46. A second core network device, comprising:
a transceiver module, configured to send, by the second core network function, a first request message to a first core network function, wherein the first request message is related to a registration of a user equipment (UE) to a network slice or a deregistration of the UE from the network slice.

47. A user equipment (UE), comprising:
a transceiver module, configured to send by the UE, a second request message to a second core network function, wherein the second request message is used to trigger the second core network function to send a first request message to a first core network function, and the first request message is related to a registration of the UE to a network slice or a deregistration of the UE from the network slice.

48. A communication system, comprising a first core network device, a second core network device, and a user equipment (UE), wherein the second core network device is configured to implement the method according to any one of claims 1 to 24, the first core network device is configured to implement the method according to any one of claims 25 to 38, and the UE is configured to perform the method according to any one of claims 39 to 43.

49. A communication device, comprising:
at least one processor,
wherein the at least one processor is configured to invoke instructions to cause the communication device to perform the method according to any one of claims 1 to 24, the method according to any one of claims 25 to 38, the method according to any one of claims 39 to 43, and the method according to claim 44.

50. A storage medium storing instructions that, when executed on a communication device, cause the communication device to perform the method according to any one of claims 1 to 24, the method according to any one of claims 25 to 38, the method according to any one of claims 39 to 43, and the method according to claim 44.
